# EUROPEAN PATENT APPLICATION

(11) **EP 1 577 890 A1**
(43) Date of publication of application: **21.09.2005**
(21) Application number: 03775995.8
(22) Date of filing: 01.12.2003
(51) Int. Cl.: G11B 17/04, G11B 25/04, G11B 33/08

(54) **DISC DEVICE**

(30) Priority: 26.12.2002 JP 2002378494; 02.10.2003 JP 2003344693
(71) Applicant: MATSUSHITA ELECTRIC INDUSTRIAL CO., LTD., Osaka 571-8501 (JP)
(72) Inventor: Ezawa, Kozo, Hirakata-shi, Osaka 573-0049 (JP); Santo, Takeo, Hirakata-shi, Osaka 573-0066 (JP); Inata, Masahiro, Itami-shi, Hyogo 664-0001 (JP); Saji, Yoshito, Ashiya-shi, Hyogo 659-0043 (JP); Maruyama, Masuo, Moriguchi-shi, Osaka 570-0005 (JP); Takizawa, Teruyuki, Neyagawa-shi, Osaka 572-0019 (JP); Morioka, Yukio, Katano-shi, Osaka 576-0016 (JP); Kuroda, Tadashi, Kobe-shi, Hyogo 650-0046 (JP); Naoki, Gorou, Higashiosaka-shi, Osaka 578-0947 (JP)
(74) Representative: Tothill, John Paul
(86) International application number: PCT/JP2003/015364
(87) International publication number: WO 2004/061840

(57) **Abstract**

First and second optical heads (3A, 3B) are disposed on the same side with respect to a plane including a disk surface. Then, a media tray (19) on which a disk is mounted is moved within a plane substantially parallel with the disk surface. Using two optical heads (3A, 3B) selectively, recording and/or reproducing is performed with respect to the optical disk. The height of a disk apparatus does not increase, and signal lines connected to the optical heads (3A, 3B) are not forced to bend.

## Description

### Technical Field

The present invention relates to a disk apparatus that includes a plurality of optical heads for optically recording data on and/or reproducing data from an optical disk, selects the optical head to be used according to situations and performs recording or reproducing with respect to the optical disk corresponding to each situation.

### Background Art

Recording/ reproducing optical disk apparatuses for performing recording or reproducing with respect to a disk-like recording medium, such as a CD or a DVD that has a higher recording density than a CD, by using a light beam and optical disk media used therefor have been widespread already. Nowadays, the technological development aiming at achieving a still higher recording density also is accelerated.

There are various types of recording and reproducing forms of these apparatuses and media, for example, a read only type, a write once type and a rewritable type, depending on their use. Also, as can be understood by the relationship between a CD and a DVD, for example, recording and reproducing forms vary widely in terms of the difference in wavelength of a light source used for recording and reproducing.

As described above, currently, there are various kinds of optical disk apparatuses and optical disk media used therefor. Thus, for their recording or reproducing, apparatuses and media corresponding to them are needed. In these apparatuses, in particular, it is ideal that a single optical head for emitting and receiving a light beam directly is constructed so as to be made ready for various recording and reproducing forms and recording densities.

However, in many cases, it is difficult for a single optical head to exhibit the characteristics necessary for each of the combinations of plural wavelengths and plural kinds of optical systems, so that a sufficient performance margin cannot be maintained. Thus, a slight difference in usage conditions sometimes varies the characteristics, rendering the optical head unusable. In order to avoid this, it often is appropriate from the viewpoint of the size of an optical head, a reliability margin or costs for production adjustment and components to use a plurality of optical heads tailored to specific wavelengths of the light beam or optical systems as much as possible and perform recording or reproducing with respect to a disk corresponding to each optical head by this optical head. In other words, it is preferable that an individual optical head compliant with a specification of a recording/ reproducing system to be adopted is mounted directly on the apparatus.

From this viewpoint, a configuration of an apparatus on which a plurality of optical heads compliant with respective specifications are mounted is disclosed in JP 2943918 B, for example.

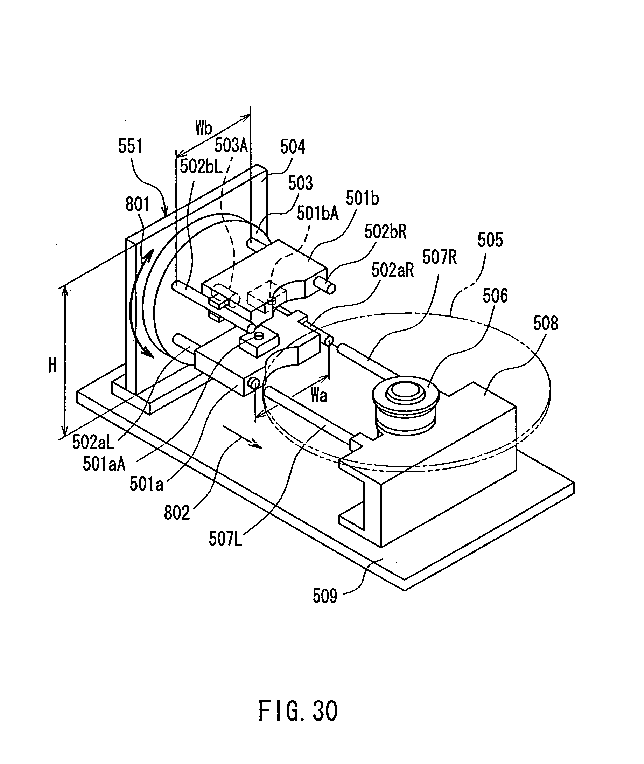

FIG. 30 is a perspective view showing this conventional optical disk apparatus.

First, a schematic configuration in the present example will be described. This example illustrates an optical disk apparatus that includes two optical heads and performs recording or reproducing with respect to respective optical disks.

Numerals 501a and 501b respectively denote a first optical head and a second optical head for optical disks that are recordable or reproducible in the optical disk apparatus of the present example, numerals 502aL and 502aR denote first small guide shafts for supporting the first optical head 501a when the first optical head 501a is received, and numerals 502bL and 502bR denote second small guide shafts for supporting the second optical head 501b when the second optical head 501b is received. The first small guide shafts 502aL, 502aR and the second small guide shafts 502bL, 502bR constitute an optical head receiving portion 551 together with a rotation plate 503 and a support stand 504. The rotation plate 503 is supported by the support stand 504 so as to be rotatable around a rotation spindle 503A and rotated in directions indicated by arrows 801 by a rotating means, which is not shown in the figure. Further, the first small guide shafts 502aL, 502aR and the second small guide shafts 502bL, 502bR are provided in parallel with each other and perpendicularly to the rotation plate 503. The distance from a plane including the first small guide shafts 502aL and 502aR to the rotation spindle 503A equals the distance from a plane including the second small guide shafts 502bL and 502bR to the rotation spindle 503A.

Numeral 505 denotes an optical disk with respect to which data are recorded or reproduced in this apparatus, numeral 506 denotes a disk motor for rotating the optical disk 505, numerals 507L and 507R denote guide shafts for guiding the first optical head 501a or the second optical head 501b in one radial direction of the optical disk 505 when performing recording or reproducing with respect to the optical disk 505, and numeral 508 denotes a transfer stand for supporting the disk motor 506 and the guide shafts 507L and 507R integrally. In addition, both the support stand 504 and the transfer stand 508 are supported by a base stand 509.

The optical heads 501a and 501b are transferred by a transferring and driving means (not shown) on the guide shafts 507L and 507R, thereby performing scanning in one radial direction of the optical disk 505, allowing recording or reproducing.

The following is a description of a function, an operation, etc. of individual elements.

The first optical head 501a and the second optical head 501b are received in the optical head receiving portion 551, with the former being supported by the first small guide shafts 502aL and 502aR and the latter being supported by the second small guide shafts 502bL and 502bR. At this time, in the optical head receiving portion 551, an objective lens 501aA of the optical head 501a and an objective lens 501bA of the optical head 501b face each other.

In FIG. 30, the small guide shaft 502aL and the guide shaft 507L are arranged in a straight line, and the small guide shaft 502aR and the guide shaft 507R are arranged in a straight line. The first optical head 501a is transferred in a direction indicated by an arrow 802 from the receiving portion 551 to a side of the transfer stand 508 so that it can be transferred on the guide shafts 507L and 507R. Thus, using the first optical head 501a, data are recorded on or reproduced from the optical disk 505.

When the rotation plate 503 is rotated by the rotating and driving means (not shown) by 180° in one of the directions indicated by the arrows 801, the small guide shaft 502bR and the guide shaft 507L are arranged in a straight line, while the small guide shaft 502bL and the guide shaft 507R are arranged in a straight line. The second optical head 501b is transferred in the direction indicated by the arrow 802 from the receiving portion 551 to the side of the transfer stand 508 so that it can be transferred on the guide shafts 507L and 507R. Thus, using the second optical head 501b, data are recorded on or reproduced from the optical disk 505.

When the recording or reproducing by the individual optical head is finished or when one of the optical heads is transferred to the side of the transfer stand 508, the kind of the optical disk mounted on the disk motor 506, for example, is detected only to find that recording or reproducing cannot be performed with this optical head and then is replaced by the other optical head, the above-described process is carried out in a reversed manner such that the optical head is transferred from the side of the transfer stand 508 to that of the receiving portion 551 and the other optical head is transferred from the receiving portion 551 to the side of the transfer stand 508.

However, when performing recording or reproducing with respect to a specific optical disk 505, for example, in the above-described apparatus, in the case of selecting the first optical head 501a or the second optical head 501b and transferring it to the side of the transfer stand 508 or in the case of once transferring the first optical head 501a located on the side of the transfer stand 508 to the small guide shafts 502aL and 502aR and then transferring the second optical head 501b to the guide shafts 507L and 507R in order to replace the first optical head 501a by the second optical head 501b, the rotation plate 503 has to be rotated. Therefore, it is necessary for the rotation diameter of the rotation plate 503 to be at least equal to or greater than the larger one of a distance Wa between the first small guide shafts 502aL and 502aR and a distance Wb between the second small guide shafts 502bL and 502bR.

This leads to a restriction in which the height H of the receiving portion 551 has to be equal to or greater than the larger one of the distance Wa and the distance Wb. In other words, the height of the apparatus depends on the distances Wa and Wb, namely, the widths of the first optical head 501a and the second optical head 501b, posing a problem in that this presents an obstacle to reducing the height of the apparatus.

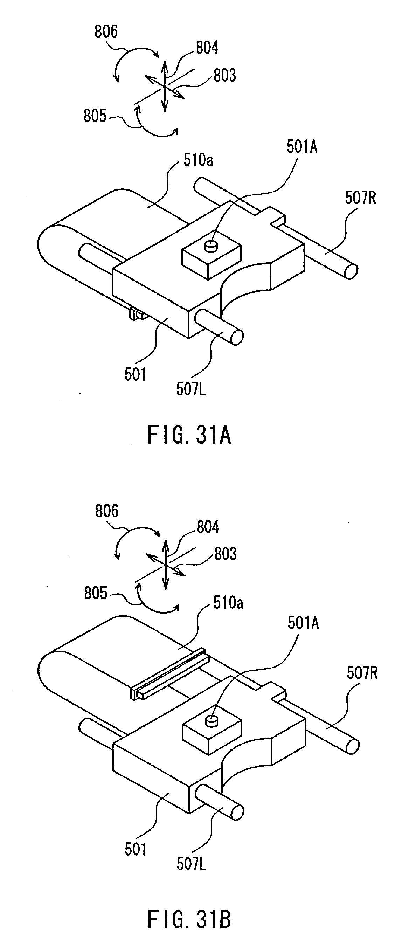

Furthermore, in the optical head illustrated in the present example, a feeder or a signal line to the optical head is formed of a flexible cable 510a such as a FPC or a FFC. This flexible cable 510a is bent toward a back surface side of the objective lens 501A as shown in FIG. 31A or bent toward the same side of the objective lens 501A as shown in FIG. 31B, and guided to be connected to a printed board with a connector or the like. In such cases, the flexible cable 510a can be bent without force by a linear movement of the optical head 501 in a direction indicated by an arrow 803 or an arrow 804 shown in FIGs. 31A and 31B. On the other hand, when the optical head 501 is moved rotationally in directions indicated by arrows 805 or arrows 806, the flexible cable 510a must be forced to bend.

Thus, in the configuration illustrated in the present example, the flexible cable 510a can be bent without force when the optical head 501 is transferred on the guide shafts 507L and 507R. On the other hand, in the case of rotating the receiving portion 551 in the directions indicated by the arrows 801 shown in FIG. 30 with the optical head 501 being received in the receiving portion, it is difficult for the flexible cable 510a to maintain an appropriately bent state because the optical head 501 is rotated in the directions indicated by the arrows 806.

Moreover, when replacing the first optical head 501a and the second optical head 501b, each of the optical heads is inserted into and removed from the guide shafts 507L and 507R, posing a problem in that a resistance or the like at this time lowers an operational reliability.

### Disclosure of Invention

It is an object of the present invention to solve the conventional problems as described above and to provide a disk apparatus in which the height of the apparatus is not restricted by the distance between a pair of guide shafts for guiding an optical head, a feeder or a signal line to the optical head can be routed unforcedly, and a plurality of optical heads can be selected and used at the time of recording or reproducing according to the kinds of a disk with respect to which data are recorded or reproduced.

In order to achieve the above-mentioned object, a disk apparatus according to the present invention includes a first disk rotating mechanism for rotating a first disk mounted thereon, with data being recordable on and/or reproducible from the first disk using a first light beam, a first optical head for emitting the first light beam and performing recording and/or reproducing with respect to the first disk, a first optical head moving mechanism for moving the first optical head substantially in a radial direction of the first disk, a second disk rotating mechanism for rotating a second disk mounted thereon, with data being recordable on and/or reproducible from the second disk using a second light beam, a second optical head for emitting the second light beam and performing recording and/or reproducing with respect to the second disk, a second optical head moving mechanism for moving the second optical head substantially in a radial direction of the second disk, a transfer base on which the first disk rotating mechanism, the first optical head, the first optical head moving mechanism, the second disk rotating mechanism, the second optical head and the second optical head moving mechanism are mounted, a media tray conveyed to a first tray position for performing recording and/or reproducing with respect to the first disk, a second tray position for performing recording and/or reproducing with respect to the second disk and a third tray position for mounting and removing the first disk and the second disk, a first tray guide for guiding the media tray in a first direction that is parallel with a surface of the first disk and a surface of the second disk and substantially is orthogonal to a straight line connecting a center of rotation of the first disk rotating mechanism and a center of rotation of the second disk rotating mechanism, a second tray guide for guiding the media tray in a second direction that is parallel with the surface of the first disk and the surface of the second disk and parallel with the straight line connecting the center of rotation of the first disk rotating mechanism and the center of rotation of the second disk rotating mechanism, a first tray driving mechanism for moving the media tray in the first direction, and a second tray driving mechanism for moving the media tray in the second direction. The first optical head and the second optical head are disposed on the same side with respect to a plane including a surface of a disk mounted on the media tray.

### Brief Description of Drawings

FIG. 1 is an exploded perspective view showing an overall configuration of a disk conveying mechanism in a disk apparatus according to an embodiment of the present invention.
FIG. 2 is a perspective view showing a first tray driving mechanism in the disk apparatus according to an embodiment of the present invention.
FIG. 3 is a side view showing a lifting and lowering operation of a transfer base in the disk apparatus according to an embodiment of the present invention.
FIG. 4 is a perspective view showing an exemplary structure of a disk cartridge used in the disk apparatus according to an embodiment of the present invention.
FIG. 5 is an exploded perspective view showing a mechanism for opening and closing a cartridge shutter of the disk cartridge in the disk apparatus according to an embodiment of the present invention.
FIG. 6 is a perspective view showing a relationship between the disk cartridge and the transfer base in the disk apparatus according to an embodiment of the present invention.
FIG. 7 is a perspective view showing another example of a shape of a slide cam for lifting and lowering the transfer base in the disk apparatus according to an embodiment of the present invention.
FIG. 8 is a perspective view showing yet another example of the shape of the slide cam for lifting and lowering the transfer base in the disk apparatus according to an embodiment of the present invention.
FIG. 9 is a perspective view showing another structural example of the mechanism for lifting and lowering the transfer base in the disk apparatus according to an embodiment of the present invention.
FIG. 10 is an exploded perspective view showing details of a main portion of the structural example shown in FIG. 9.
FIG. 11 illustrates an operation of the mechanism for lifting and lowering the transfer base in the structural example shown in FIG. 9.
FIG. 12 illustrates the operation of the mechanism for lifting and lowering the transfer base in the structural example shown in FIG. 9.
FIG. 13 illustrates the operation of the mechanism for lifting and lowering the transfer base in the structural example shown in FIG. 9.
FIG. 14 illustrates the operation of the mechanism for lifting and lowering the transfer base in the structural example shown in FIG. 9.
FIG. 15 illustrates the operation of the mechanism for lifting and lowering the transfer base in the structural example shown in FIG. 9.
FIG. 16 illustrates the operation of the mechanism for lifting and lowering the transfer base in the structural example shown in FIG. 9.
FIG. 17 illustrates the operation of the mechanism for lifting and lowering the transfer base in the structural example shown in FIG. 9.
FIG. 18 illustrates the operation of the mechanism for lifting and lowering the transfer base in the structural example shown in FIG. 9.
FIG. 19 is a perspective view showing yet another structural example of the mechanism for lifting and lowering the transfer base in the disk apparatus according to an embodiment of the present invention.
FIG. 20 is a perspective view showing a second tray conveying and driving system that can be driven manually in the disk apparatus according to an embodiment of the present invention.
FIG. 21 is a plan view showing an operation of another media tray driving mechanism in the disk apparatus according to an embodiment of the present invention.
FIG. 22 is a sectional view showing another structural example of the transfer base in the disk apparatus according to an embodiment of the present invention.
FIG. 23 is a perspective view showing another structural example of a second tray driving mechanism in the disk apparatus according to an embodiment of the present invention.
FIG. 24 is a perspective view showing details of a main portion of the second tray driving mechanism shown in FIG. 23.
FIGs. 25A to 25C show how a mating of a second conveying rack pin and a second conveying cam groove varies in the second tray driving mechanism shown in FIG. 24.
FIG. 26 is an exploded perspective view showing another example of a method for positioning the disk cartridge in a second direction in the disk apparatus according to an embodiment of the present invention.
FIG. 27 is a perspective view showing positioning pins passing through a media tray in the disk apparatus according to an embodiment of the present invention.
FIG. 28 illustrates a mechanism for opening and closing a cartridge shutter of another disk cartridge used in the disk apparatus according to an embodiment of the present invention.
FIG. 29 is an exploded perspective view showing a structure of the disk cartridge shown in FIG. 28.
FIG. 30 is a perspective view showing a schematic configuration of a conventional disk apparatus.
FIGs. 31A and 31B are perspective views showing an arrangement of a flexible cable in the conventional disk apparatus.

### Best Mode for Carrying Out the Invention

In accordance with the above-described disk apparatus of the present invention, first and second optical heads of two different specifications are arranged in parallel on the same side with respect to a plane including a disk surface, so that they can each perform recording and/or reproducing. This makes it possible to mount two kinds of optical heads without increasing the dimension particularly in a direction perpendicular to the disk surface, namely, a thickness direction of the apparatus, compared with a disk apparatus on which only one optical head is mounted. Recently, in the market of so-called AVC equipment, a reduction in apparatus thickness is demanded because it increases a commercial value. Compared with a disk apparatus on which only one optical head is mounted, the disk apparatus of the present invention does not become thicker, though the overall volume inevitably increases. Consequently, it is possible to provide a disk apparatus having a high commercial value.

Further, the configuration in which the media tray moves between first to third tray positions so as to select the optical head for performing recording and/or reproducing solves the conventional problem that the feeder or the signal line to the optical head has to be routed by force.

In the disk apparatus according to the present invention, it is preferable that the first tray position, the second tray position and the third tray position are in substantially the same plane. This makes it possible to simplify the mechanisms for moving the media tray and reduce the thickness of the disk apparatus further.

In the disk apparatus according to the present invention, it also is preferable that the second tray driving mechanism includes at least one component capable of receiving a driving force from an external driving source. This makes it possible to remove dust adhering to a lens attached to the optical head by a simple and reliable operation.

In the disk apparatus according to the present invention, it also is preferable that the transfer base is displaced toward and away from the disk mounted on the disk tray. In this way, when conveying the media tray, it is possible to prevent the media tray from interfering with the disk rotating mechanisms and the optical heads.

Also, in the disk apparatus according to the present invention, the transfer base may be divided into a first transfer base on which the first disk rotating mechanism, the first optical head and the first optical head moving mechanism are mounted and a second transfer base on which the second disk rotating mechanism, the second optical head and the second optical head moving mechanism are mounted. In this manner, in the case where the first disk rotating mechanism and the second disk rotating mechanism differ in dimension such as a height and the first optical head and the second optical head differ in dimension such as a height or in the case where only one of the first disk and the second disk is contained in a cartridge, it becomes easier to adjust the distance between the disk surfaces and the optical heads individually.

In this case, it is preferable that the first transfer base and the second transfer base independently are displaced toward and away from the disk mounted on the media tray. This makes it possible to reduce a load in the driving mechanisms. Also, when conveying the disk tray, the interference between the media tray and the rotating mechanisms or the optical heads can be avoided more easily.

In this case, the disk apparatus according to the present invention further may include a first lifting and lowering plate having a cam groove and moving in a direction substantially parallel with the second direction, and a second lifting and lowering plate having a cam groove and moving in the direction substantially parallel with the second direction. In this case, it is preferable that the first lifting and lowering plate and the second lifting and lowering plate respectively move in the direction substantially parallel with the second direction, thereby causing the respective cam grooves to displace the first transfer base and the second transfer base toward and away from the disk mounted on the disk tray. This makes it possible to displace the first transfer base and the second transfer base independently with a simple configuration in a reliable manner.

More specifically, it is preferable that the disk apparatus according to the present invention further includes a first lifting and lowering rack and a second lifting and lowering rack that are provided respectively in the first lifting and lowering plate and the second lifting and lowering plate and have a pitch line in the direction substantially parallel with the second direction, and a lifting and lowering gear that engages with the first lifting and lowering rack and the second lifting and lowering rack and moves the first lifting and lowering plate and the second lifting and lowering plate in the direction substantially parallel with the second direction. In this manner, one common lifting and lowering gear can drive the first lifting and lowering plate and the second lifting and lowering plate, so that the configuration can be simplified and the number of components can be reduced.

Furthermore, it is preferable that the first lifting and lowering rack is an intermittent rack having a first unmating region that does not engage with the lifting and lowering gear, and the second lifting and lowering rack is an intermittent rack having a second unmating region that does not engage with the lifting and lowering gear. In this way, one of the first transfer base and the second transfer base can be lifted and lowered while keeping the other at rest.

In this case, it is preferable that the disk apparatus according to the present invention further includes an engagement switching mechanism that is driven by the movement of the first lifting and lowering plate so as to control the engagement between the second lifting and lowering rack and the lifting and lowering gear and driven by the movement of the second lifting and lowering plate so as to control the engagement between the first lifting and lowering rack and the lifting and lowering gear. This achieves independent displacement operations of the first transfer base and the second transfer base with a simple configuration.

It also is preferable that the pitch line of the first lifting and lowering rack and that of the second lifting and lowering rack face each other with the lifting and lowering gear interposed therebetween. This makes it possible to make an effective use of a small space, thereby achieving a small apparatus.

Furthermore, it is preferable that the first lifting and lowering plate includes a substantially L-shaped first switching cam groove formed of a first straight portion that is substantially parallel with the second direction and a first orthogonal portion that is connected at right angles with the first straight portion, the second lifting and lowering plate includes a substantially L-shaped second switching cam groove formed of a second straight portion that is substantially parallel with the second direction and a second orthogonal portion that is connected at right angles with the second straight portion, the engagement switching mechanism includes a switching lever including a first pin that mates with the first switching cam groove and a second pin that mates with the second switching cam groove, and the switching lever is rotatable around an axis that is equidistant from the first pin and the second pin. In this way, with a simple configuration, it is possible to carry out automatically an operation of lifting and lowering one of the first transfer base and the second transfer base while keeping the other at rest.

In the above, it is preferable that the second pin mates with the second straight portion only when the first pin mates with the first orthogonal portion, and the first pin mates with the first straight portion only when the second pin mates with the second orthogonal portion. In this way, it is possible to carry out reliably an operation of lifting and lowering one of the first transfer base and the second transfer base while keeping the other at rest.

Also, it is preferable that the lifting and lowering gear engages with the first lifting and lowering rack only when the first pin mates with the first straight portion, and the lifting and lowering gear engages with the second lifting and lowering rack only when the second pin mates with the second straight portion. In this way, it is possible to carry out reliably an operation of lifting and lowering one of the first transfer base and the second transfer base while keeping the other at rest.

Alternatively, the disk apparatus according to the present invention further may include a first lifting and lowering rack and a second lifting and lowering rack that are provided respectively in the first lifting and lowering plate and the second lifting and lowering plate and have a pitch line in the direction substantially parallel with the second direction, a first lifting and lowering gear that engages with the first lifting and lowering rack and moves the first lifting and lowering plate in the direction substantially parallel with the second direction, and a second lifting and lowering gear that engages with the second lifting and lowering rack and moves the second lifting and lowering plate in the direction substantially parallel with the second direction. This allows the first lifting and lowering plate and the second lifting and lowering plate to be driven with the lifting and lowering gears for respective plates, thereby displacing the first transfer base and the second transfer base independently in a reliable manner.

Moreover, in the disk apparatus according to the present invention, it is preferable that the second tray driving mechanism includes a driving source, and a gear train for transmitting a driving force obtained by the driving source. In this manner, with a simple configuration, the media tray can be moved reliably in the second direction.

Alternatively, in the disk apparatus according to the present invention, it is preferable that the second tray driving mechanism includes a gear for transmitting a driving force, a conveying rack that engages with the gear and moves in a direction parallel with the second direction, a conveying rack pin provided in the conveying rack, a conveying and driving lever that is held rotatably, and a conveying cam groove that mates with the conveying rack pin and is provided in the conveying and driving lever along a radial direction with respect to an axis of rotation of the conveying and driving lever. Then, the conveying rack preferably is moved to rotate the conveying and driving lever, causing the first tray guide that mates directly or indirectly with a part of the conveying and driving lever to be driven along the second direction. With this configuration, the media tray also can be moved reliably in the second direction.

In this case, it is preferable that the conveying cam groove has a substantially "Y" shape bifurcating on a side away from the axis of rotation. This can prevent the media tray from moving in the second direction and damaging the driving system when an external shock is applied.

Also, in the disk apparatus according to the present invention, at least one of the first disk and the second disk may be contained in a case-like disk cartridge. This can prevent the disk surface from becoming dirty and being damaged.

In this case, the disk cartridge may have an opening for exposing the contained disk and a first cartridge shutter and a second cartridge shutter for opening and closing the opening, and the first cartridge shutter and the second cartridge shutter respectively may rotate so as to change a distance therebetween, thereby opening and closing the opening.

In this case, it is preferable that an operation of opening and closing the opening by the first cartridge shutter and the second cartridge shutter is carried out together with moving the media tray along the first direction. This simplifies the mechanism for the operation of opening and closing the opening and eliminates the need for a special time for the opening and closing operation.

It is preferable that a surface of the first tray guide substantially parallel with the first direction is provided with an opening and closing member for opening and closing the opening. In this manner, with a simple configuration utilizing a narrow space, it is possible to carry out the operation of opening and closing the opening together with the movement of the media tray along the first direction.

In this case, it is preferable that a side of the first tray position with respect to the second tray position is the same as a side of the opening and closing member with respect to a direction that passes through a center of the disk contained in the disk cartridge and is parallel with the first direction. This makes it possible to reduce the movement amount of the first tray guide along the second direction.

Also, it is preferable that the disk apparatus according to the present invention further includes a movable side positioning portion provided in the first tray guide and a fixed side positioning portion whose position relative to the second tray guide is constant, and when the first tray guide is moved along the second direction, the movable side positioning portion contacts the fixed side positioning portion at a terminal end of a moving direction, thus positioning the first tray guide in the second direction. In this manner, with a simple configuration, the first tray guide can be positioned in the second direction with a high positional accuracy.

Alternatively, the disk apparatus according to the present invention further may include a fixed side positioning portion whose position relative to the second tray guide is constant, and when the media tray on which a disk cartridge containing the first disk or the second disk is mounted is moved along the second direction, the disk cartridge contacts the fixed side positioning portion at a terminal end of a moving direction, thus positioning the disk cartridge in the second direction. In this manner, with a simple configuration, the disk cartridge can be positioned in the second direction with a high positional accuracy. Therefore, a positional accuracy of the disk contained in the disk cartridge relative to the disk rotating mechanism improves further.

In the disk apparatus according to the present invention, it also is preferable that the first tray guide is provided with a common clamper unit that allows the first disk to be held firmly on the first disk rotating mechanism and allows the second disk to be held firmly on the second disk rotating mechanism. In this way, with a simple configuration and a small number of components, a mechanism for clamping the disk can be achieved.

In the disk apparatus according to the present invention, it also is preferable that a mounting surface of the first disk in the first disk rotating mechanism and a mounting surface of the second disk in the second disk rotating mechanism have substantially the same height. This makes it possible to mount the first disk and the second disk on the first disk rotating mechanism and the second disk rotating mechanism respectively without changing the height of the media tray, thereby simplifying the configuration and avoiding an increase in the size of the apparatus.

Further, in the disk apparatus according to the present invention, it is preferable that a terminal position to which the media tray moves from the third tray position along the first direction is the first tray position. In this way, waste is avoided in a moving path of the media tray from the third tray position via the first tray position to the second tray position, thereby preventing the apparatus from becoming complicated.

Moreover, in the disk apparatus according to the present invention, it is preferable that a distance between the center of rotation of the first disk rotating mechanism and the center of rotation of the second disk rotating mechanism is 0.9 to 1.1 times a dimension obtained by adding a radius of the first disk and a radius of the second disk. In this manner, even in the case where the transfer base is divided into the first transfer base and the second transfer base, it is possible to prevent a size increase of the apparatus while achieving the independent displacement of these transfer bases.

It also is preferable that the disk apparatus according to the present invention further includes a mechanical base on which the media tray, the first tray guide, the second tray guide, the first tray driving mechanism and the second tray driving mechanism are mounted. The transfer base preferably is attached to the mechanical base via a damper for absorbing a vibration. This can improve vibration characteristics of the disk apparatus.

It also is preferable that the disk apparatus according to the present invention further includes a mechanical base on which the media tray, the first tray guide, the second tray guide, the first tray driving mechanism and the second tray driving mechanism are mounted. It is preferable that the first transfer base and the second transfer base respectively are attached to the mechanical base via a first damper and a second damper for absorbing a vibration that have different vibration characteristics. In this way, it becomes possible to select the first damper and the second damper that are optimal for the first transfer base and the second transfer base respectively. Consequently, the flexibility in design increases, and the vibration characteristics of the disk apparatus improve.

Furthermore, it is preferable that the disk apparatus according to the present invention further includes a mechanical base on which the media tray, the first tray guide, the second tray guide, the first tray driving mechanism and the second tray driving mechanism are mounted. The mechanical base preferably is held by a chassis of the disk apparatus via a mechanical base damper for absorbing a vibration. This further can improve the vibration characteristics of the disk apparatus.

Moreover, in the disk apparatus according to the present invention, it is preferable that the disk cartridge is provided with at least one hole, the transfer base is provided with a positioning pin that is fitted in the hole provided in the disk cartridge, and the fitting between the hole and the positioning pin allows the disk cartridge to be positioned with respect to the first disk rotating mechanism or the second disk rotating mechanism. In this manner, at the first tray position and/or the second tray position, the disk cartridge can be positioned accurately in a direction parallel with the disk surface with respect to the disk rotating mechanism.

Furthermore, it is preferable that a basal portion of the positioning pin is provided with a seating that contacts a surface of the disk cartridge. In this manner, at the first tray position and/or the second tray position, the disk cartridge can be positioned accurately in a direction perpendicular to the disk surface with respect to the disk rotating mechanism.

In this case, it is preferable that a positioning pin hole through which the seating is passed is formed on a surface of the media tray on which the disk cartridge is mounted. This allows the disk cartridge to be positioned accurately with respect to the disk rotating mechanism. Also, since it is possible to restrict the movement of the media tray in the first direction and the second direction due to an external shock, the damage to the mechanism for moving the media tray can be prevented.

It is preferable that the seating is passed through the positioning pin hole when the first disk or the second disk is mounted on the first disk rotating mechanism or the second disk rotating mechanism. This makes it possible to position the disk cartridge accurately with respect to the disk rotating mechanism and restrict the movement of the media tray due to an external shock, while allowing the media tray to move in the first direction and the second direction.

It is preferable that a clearance of 0.2 to 1.5 mm is provided between an inner peripheral surface of the positioning pin hole and an outer periphery of the seating. This can achieve both an operation of inserting and removing the seating with respect to the positioning pin hole and the restriction of the movement of the media tray due to an external shock.

The following is a description of the concept of a disk apparatus in an embodiment of the present invention.

The disk apparatus of the present embodiment allows recording and/or reproducing in different optical systems and performs recording and/or reproducing with respect to a first optical disk medium 1A and a second optical disk medium 1B that have different shapes and are bare or contained in cartridges in a form used in "DVD-RAM" (registered trademark) media, for example.

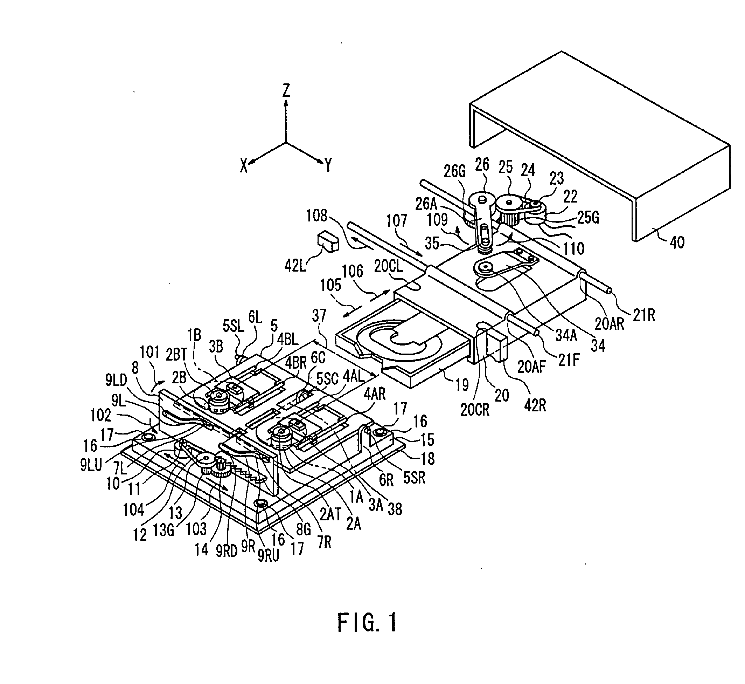

FIG. 1 is an exploded perspective view schematically showing an overall mechanism that is used in the disk apparatus of the present embodiment and carries out a series of operations from conveying a disk-like recording medium to achieving recording and/or reproducing. As shown in the figure, an XYZ three-dimensional rectangular coordinate system is set, with an X axis being a tracking direction of an optical head with respect to the disk-like medium, a Y axis being a direction that is parallel with a disk surface and perpendicular to the X axis (a tangential direction) and a Z axis being a direction normal to the disk surface.

In FIG. 1, numeral 2A denotes a first disk motor on which the first optical disk medium 1A is mounted and rotated, numeral 2B denotes a second disk motor on which the second optical disk medium 1B is mounted and rotated, numeral 3A denotes a first optical head for performing recording and/or reproducing with respect to the first optical disk medium 1A, numeral 3B denotes a second optical head for performing recording and/or reproducing with respect to the second optical disk medium 1B, numerals 4AL and 4AR denote a first left guide shaft and a first right guide shaft (constituting a first guide structure) for supporting and guiding the first optical head 3A when transferring the first optical head 3A in one radial direction of the first optical disk medium 1A (an X-axis direction), numerals 4BL and 4BR denote a second left guide shaft and a second right guide shaft (constituting a second guide structure) for supporting and guiding the second optical head 3B when transferring the second optical head 3B in one radial direction of the second optical disk medium 1B (the X-axis direction), and numeral 5 denotes a transfer base for supporting all the above members integrally. Numeral 15 denotes a mechanical base, and rotation spindles 5SL, 5SC and 5SR are supported by support stands 6L, 6C and 6R provided on the mechanical base 15. The rotation spindles 5SL, 5SC and 5SR are arranged in a straight line along a Y-axis direction, and the transfer base 5 is held so as to be rotatable around these rotation spindles 5SL, 5SC and 5SR in a direction indicated by an arrow 101 or an arrow 102.

Numeral 8 denotes a slide cam, which is held on the mechanical base 15 so as to be movable in directions indicated by an arrow 103 and an arrow 104 parallel with the Y axis. Support pins 7L and 7R are provided at an end of the transfer base 5 opposite to the side supported by the rotation spindles 5SL, 5SC and 5SR in the X-axis direction and inserted respectively into cam grooves 9L and 9R provided in the slide cam 8. When the slide cam 8 moves in the direction indicated by the arrow 103, the support pins 7L and 7R respectively are guided to cam groove lower portions 9LD and 9RD of the cam grooves 9L and 9R, whereby the transfer base 5 is rotated in the direction indicated by the arrow 102. When the slide cam 8 moves in the direction indicated by the arrow 104, the support pins 7L and 7R respectively are guided to cam groove upper portions 9LU and 9RU of the cam grooves 9L and 9R, whereby the transfer base 5 is rotated in the direction indicated by the arrow 101.

Numeral 10 denotes a lifting and lowering motor attached to the mechanical base 15. A driving force of the lifting and lowering motor 10 is transmitted from a lifting and lowering motor pulley 11 attached to a shaft of the lifting and lowering motor 10 via a lifting and lowering belt 12 to a lifting and lowering large pulley 13 attached rotatably onto the mechanical base 15 and then transmitted via a lifting and lowering large pulley gear portion 13G that is formed as one piece with the lifting and lowering large pulley 13 and a lifting and lowering intermediate gear 14 attached rotatably to the mechanical base 15 in this order to a rack gear portion 8G provided in the slide cam 8. In this manner, the slide cam 8 can be moved in the directions indicated by the arrow 103 and the arrow 104.

A system that is already known in a configuration of an apparatus similar to the optical disk apparatus of the present embodiment is used for a first transferring and driving mechanism for guiding and transferring the first optical head 3A by the first left guide shaft 4AL and the first right guide shaft 4AR and a first driving source for driving this first transferring and driving mechanism and a second transferring and driving mechanism for guiding and transferring the second optical head 3B by the second left guide shaft 4BL and the second right guide shaft 4BR and a second driving source for driving this second transferring and driving mechanism. Thus, the description thereof will be omitted from the description of the present embodiment and drawings. The first left guide shaft 4AL and the first right guide shaft 4AR (the first guide structure), the first transferring and driving mechanism and the first driving source constitute a first optical head moving mechanism. Also, the second left guide shaft 4BL and the second right guide shaft 4BR (the second guide structure), the second transferring and driving mechanism and the second driving source constitute a second optical head moving mechanism.

The mechanical base 15 is fixed to a chassis 18, which constitutes an outer case of the disk apparatus, via dampers 16 (four dampers; one of them is not shown) with support screws 17 (four support screws; one of them is not shown). It is noted that FIG. 1 shows only a bottom part of the chassis 18 for simplicity.

Numeral 19 denotes a media tray on which the first optical disk medium 1A or the second optical disk medium 1B is mounted while being contained in a disk cartridge or not being contained in any disk cartridge as a bare disk. Numeral 20 denotes a first tray guide for holding the media tray 19 and guiding the conveyance of the media tray 19 in the X-axis direction, namely, directions indicated by an arrow 105 and an arrow 106. Numerals 21F and 21R denote second tray guides for holding the first tray guide 20 and guiding the conveyance of the first tray guide 20 in the Y-axis direction, namely, directions indicated by an arrow 107 and an arrow 108. The rod-like second tray guides 21F and 21R respectively are passed through guide holes 20AF and 20AR provided in the first tray guide 20. The first tray guide 20 conveys the media tray 19 in the direction indicated by the arrow 105 so as to eject it to the outside of the apparatus, allowing the replacement of the optical disk medium, and conveys it in the direction indicated by the arrow 106 so as to receive it inside the apparatus. The second tray guides 21F and 21R convey the media tray 19 together with the first tray guide 20 onto the first disk motor 2A or the second disk motor 2B inside the apparatus.

Numeral 40 denotes a top cover, which covers the above-described structure and is fixed to the chassis 18, thereby preventing the entry of dust from the outside. When dust adheres in particular to parts directly relating to recording or reproducing such as the first optical head 3A and the second optical head 3B, the performance of these parts is likely to deteriorate. Therefore, it is preferable to form the fewest possible openings to the outside of the apparatus.

Next, the operation in which the first tray guide 20 is conveyed in the Y-axis direction (the direction indicated by the arrow 107 or the arrow 108) as one piece with the media tray 19 will be described referring to FIG. 1. Numeral 22 denotes a second conveying and driving motor that serves as a driving source for conveying the first tray guide 20 (a second driving source) and is fixed to the mechanical base 15. Numeral 25 denotes a second conveying large pulley, and numeral 26 denotes a second conveying and driving arm. The second conveying large pulley 25 and the second conveying and driving arm 26 are supported rotatably with respect to the mechanical base 15. A driving force of the second conveying and driving motor 22 is transmitted from a second conveying and driving motor pulley 23 attached to a shaft of the second conveying and driving motor 22 via a second conveying belt 24 to the second conveying large pulley 25 and then transmitted from a second conveying large pulley gear portion 25G that is formed as one piece with the second conveying large pulley 25 to a second conveying and driving arm gear portion 26G that is formed as one piece with the second conveying and driving arm 26, thus allowing the resultant torque to rotate a second arm portion 26A of the second conveying and driving arm 26 in a direction indicated by an arrow 109 or an arrow 110. This conveys the first tray guide 20 via a second connecting portion 35 in the direction indicated by the arrow 107 or the arrow 108.

The first tray guide 20 and the media tray 19 are positioned in the Y-axis direction by a first right and left positioning portion 42R and a second right and left positioning portion 42L that are provided in the mechanical base 15. In other words, they are positioned in the direction indicated by the arrow 107 by bringing a first positioning portion 20CR provided on a sidewall of the first tray guide 20 into contact with the first right and left positioning portion 42R, while they are positioned in the direction indicated by the arrow 108 by bringing a second positioning portion 20CL provided on a sidewall of the first tray guide 20 into contact with the second right and left positioning portion 42L. Incidentally, the first positioning portion 20CR and the second positioning portion 20CL that the first right and left positioning portion 42R and the second right and left positioning portion 42L contact also may be provided in the media tray 19. Further, the first right and left positioning portion 42R and the second right and left positioning portion 42L also may be provided in a member other than the mechanical base 15 as long as their positions relative to the second tray guides 21F and 21R are constant.

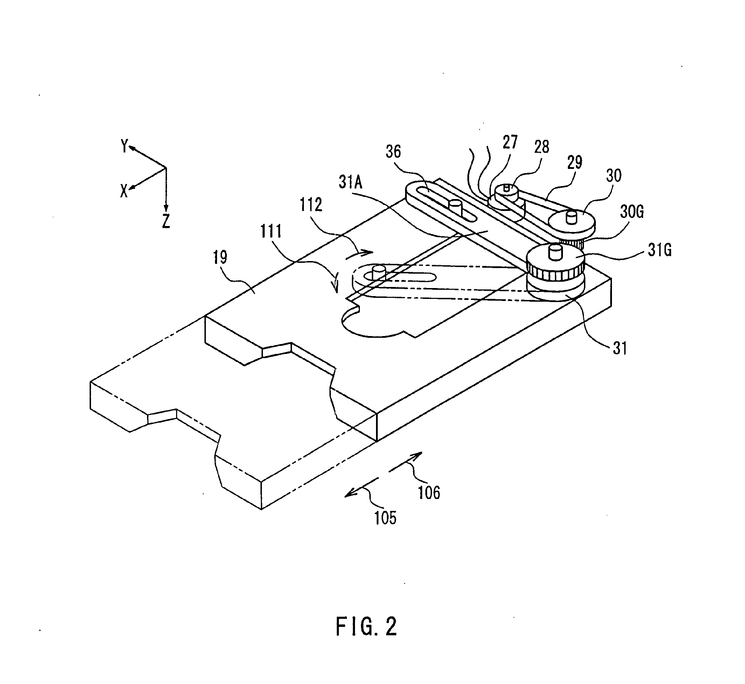

Now, the operation in which the tray 19 is guided by the tray guide 20 and conveyed in the X-axis direction (the direction indicated by the arrow 105 or the arrow 106) will be described referring to FIG. 2. FIG. 2 is a perspective view showing how the tray 19 shown in FIG. 1 is seen from a back surface. Numeral 27 denotes a first conveying and driving motor, which serves as a driving source for conveying the tray 19 and is fixed to the first tray guide 20. Numeral 30 denotes a first conveying large pulley, and numeral 31 denotes a first conveying and driving arm. The first conveying large pulley 30 and the first conveying and driving arm 31 are supported rotatably with respect to the first tray guide 20. A driving force of the first conveying and driving motor 27 is transmitted from a first conveying and driving motor pulley 28 attached to a shaft of the first conveying and driving motor 27 via a first conveying belt 29 to the first conveying large pulley 30 and then transmitted from a first conveying large pulley gear portion 30G that is formed as one piece with the first conveying large pulley 30 to a first conveying and driving arm gear portion 31G that is formed as one piece with the first conveying and driving arm 31, thus allowing a resultant torque to rotate a first arm portion 31A of the first conveying and driving arm 31 in a direction indicated by an arrow 111 or an arrow 112. This conveys the tray 19 in the direction indicated by the arrow 105 or the arrow 106 via a first connecting portion 36.

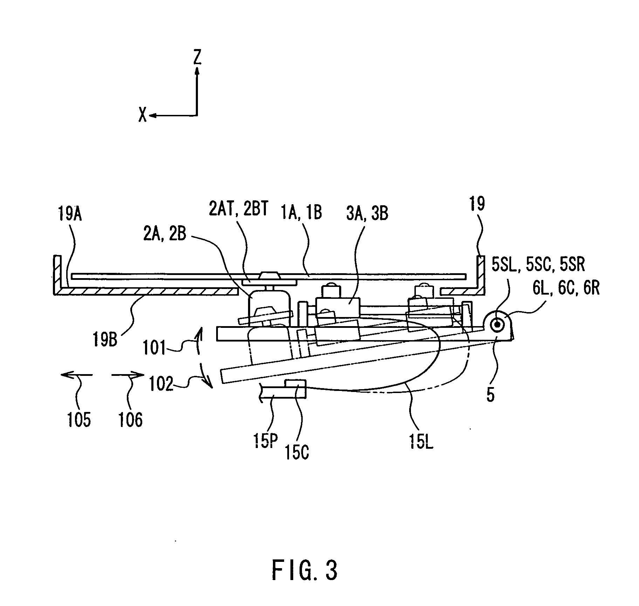

The operation in which the first optical disk medium 1A (or the second optical disk medium 1B) is mounted on the first disk motor 2A (or the second disk motor 2B) will be described referring to FIG. 3. However, the operation procedure below is just an example, and the operation does not always start from a starting point indicated below. First, as indicated by double-dashed lines in FIG. 3, in a state where the transfer base 5 is rotated in the direction indicated by the arrow 102 around the rotation spindles 5SL, 5SC and 5SR so as to lower a first turntable 2AT (or a second turntable 2BT) attached to a main shaft of the first disk motor 2A (or the second disk motor 2B), the first optical disk medium 1A (or the second optical disk medium 1B) is conveyed in the direction indicated by the arrow 106 to a position above the first disk motor 2A (or the second disk motor 2B) while being mounted on the tray 19. Next, the transfer base 5 is rotated in the direction indicated by the arrow 101 around the rotation spindles 5SL, 5SC and 5SR, thus thrusting and passing the first turntable 2AT (or the second turntable 2BT) upwardly through a center hole of the first optical disk medium 1A (the second optical disk medium 1B) as indicated by solid lines, so that the mounting is completed. At this time, the rotation amount of the transfer base 5 is set so that the first turntable 2AT (or the second turntable 2BT) and the first optical head 3A (or the second optical head 3B) lower beyond a lower surface 19B of the tray 19 shown in FIG. 3 so as not to interfere with the tray 19 and the first tray guide 20 when the tray 19 is conveyed in the X-axis direction (the direction indicated by the arrow 105 or the arrow 106) and when it is transferred in the Y-axis direction (the direction indicated by the arrow 107 or the arrow 108) together with the first tray guide 20 (see FIG. 1) with the first turntable 2AT (or the second turntable 2BT) being lowered.

When the first optical disk medium 1A (or the second optical disk medium 1B) mounted on the tray 19 is fixed to and held by the first disk motor 2A (or the second disk motor 2B), a clamper unit 34 provided in the first tray guide 20 is lowered with a driving system, which is not shown in the figure, so that a clamper 34A provided in the clamper unit 34 is forced against or allowed to attract the first turntable 2AT (or the second turntable 2BT), thereby clamping the optical disk medium 1A (or the second optical disk medium 1B) between the first turntable 2AT (or the second turntable 2BT) and the clamper 34A. The lowering operation of the clamper unit 34 may be synchronized with at least one of the operation of moving the tray 19 in the direction indicated by the arrow 106 and inserting it into the first tray guide 20, the operation of conveying the first tray guide 20 in the direction indicated by the arrow 107 or the arrow 108 and the operation of lifting the transfer base 5, for example. Additionally, as a mechanism for generating a force for forcing the clamper 34A against or allowing it to attract the first turntable 2AT (or the second turntable 2BT), a known technique such as a magnetic force or a spring biasing force, for example, can be used, though not shown in the figure.

In FIG. 3, numeral 15P denotes a printed board for controlling the first optical head 3A (or the second optical head 3B) electrically, numeral 15L denotes a flexible cable (such as a FPC or a FFC) for connecting the printed board 15P and the first optical head 3A (or the second optical head 3B), and numeral 15C denotes a connector serving as their connecting portion. Even when the first optical head 3A (or the second optical head 3B) is transferred between the side closer to the first disk motor 2A (or the second disk motor 2B) and the side further thereto, the flexible cable 15L can follow the movement of the first optical head 3A (or the second optical head 3B) in an unforced bent state as shown in FIG. 3.

Further, in the present embodiment, the first turntable 2AT and the second turntable 2BT have an equal height (a position in the Z-axis direction). This is because, by setting lower surfaces of the first optical disk medium 1A and the second optical disk medium 1B that are mounted on a media mounting surface 19A of the tray 19 to have an equal height, it is possible to convey the tray 19 in the direction indicated by the arrow 107 or the arrow 108 in FIG. 1 while keeping the height of the tray 19 constant and to hold each optical disk medium with the first turntable 2AT (or the second turntable 2BT) appropriately. In the case where the optical disk media are contained in disk cartridges as described below so that the height from a lower surface of a disk cartridge to the lower surface of the first optical disk medium 1A and that from the lower surface of the disk cartridge to the lower surface of the second optical disk medium 1B are different from each other, a structure capable of accommodating the difference in height may be provided on the media mounting surface 19A (for example, a step is formed on the media mounting surface 19A), making it possible to hold these optical disk media even when the first turntable 2AT and the second turntable 2BT are set to have an equal height. However, in the case where it is not possible to provide such a structure capable of accommodating the difference in height between the lower surfaces of the first optical disk medium 1A and the second optical disk medium 1B, the difference in height may be provided between the first turntable 2AT and the second turntable 2BT.

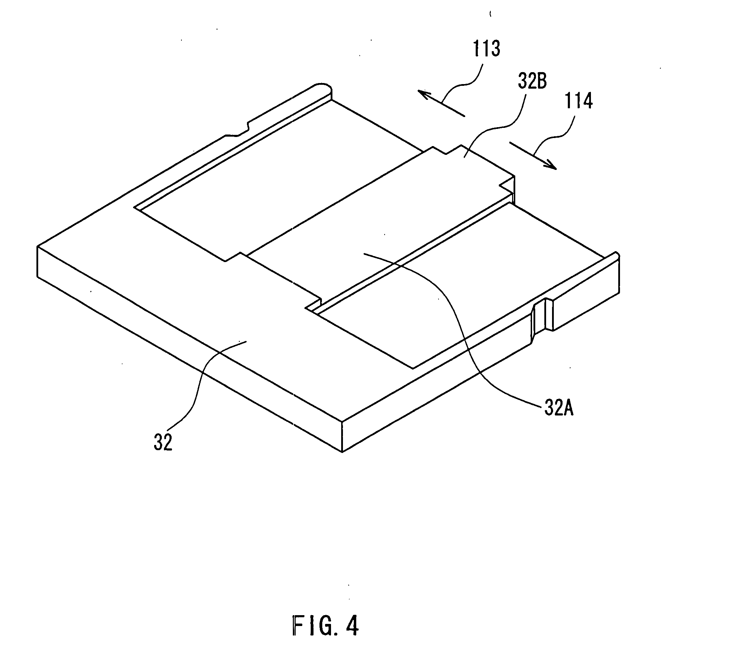

The following is a description of a disk cartridge used for the first optical disk medium 1A and/or the second optical disk medium 1B with reference to FIG. 4. In FIG. 4, numeral 32 denotes a disk cartridge in a form used for a DVD-RAM, for example, and numeral 32A denotes a cartridge shutter that opens and closes for exposing/ hiding a contained disk. The cartridge shutter 32A is moved by applying a pressing force in a direction indicated by an arrow 113 or an arrow 114 to a shutter protruding portion 32B thereof, so that the contained disk is exposed. When the pressing force is released, the cartridge shutter 32A returns to an original position by a restoring force of a spring member or the like (not shown), so that the disk is hidden.

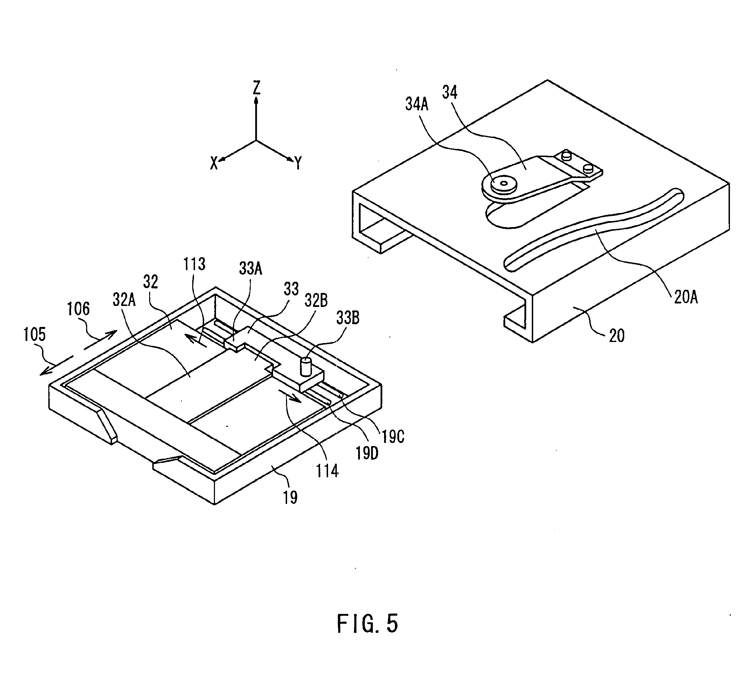

FIG. 5 is an exploded perspective view showing a schematic structure of an exemplary mechanism for opening and closing the cartridge shutter 32A provided in the disk cartridge 32. Numeral 33 denotes a shutter opener that is guided in the direction indicated by the arrow 113 or the arrow 114 by guide grooves 19C and 19D along the Y-axis direction provided in the tray 19. When the disk cartridge 32 is mounted on the tray 19, the shutter protruding portion 32B mates with a shutter opener protruding portion 33A. When the tray 19 with such a structure is incorporated into the first tray guide 20, a shutter cam protruding portion 33B provided on an upper surface of the shutter opener 33 fits into a shutter cam groove 20A provided in the first tray guide 20. As the tray 19 moves in the X-axis direction (the direction indicated by the arrow 105 or the arrow 106) with respect to the tray guide 20, the shutter opener 33 moves in the Y-axis direction (the direction indicated by the arrow 113 or the arrow 114) with respect to the tray 19. In this way, the shutter 32A is opened and closed, whereby the contained disk is exposed/hidden.

In the disk apparatus according to the present embodiment, the first optical head 3A and the second optical head 3B may have different light source wavelengths and/or lens specifications, for example. The light source wavelength can be infrared wavelengths from 750 to 800 nm, red wavelengths from 600 to 700 nm or blue wavelengths from 400 to 450 nm, for example. Further, a numerical aperture, which is a lens specification, can vary from about 0.4 to 0.9, for example.

In the case where the two optical heads 3A and 3B have different specifications as described above, since a required time from inserting an optical disk medium to actually recording and/or reproducing data differs depending on the head to be used, it is preferable for reducing the required time to select as the first optical head 3A an optical head to be used more frequently.

Although the diameter of a disk usable in the disk apparatus according to the present embodiment is not particularly limited, it generally may be 120 mm, 80 mm or the like as in CDs or DVDs, for example. When using a disk having a diameter of 120 mm, for example, it is appropriate that the center distance between the first disk motor 2A and the second disk motor 2B is set to be about 0.9 to 1.1 times the dimension obtained by adding the radius of the first disk medium 1A and that of the second disk medium 1B, namely, about 110 mm to 130 mm. The reason follows.

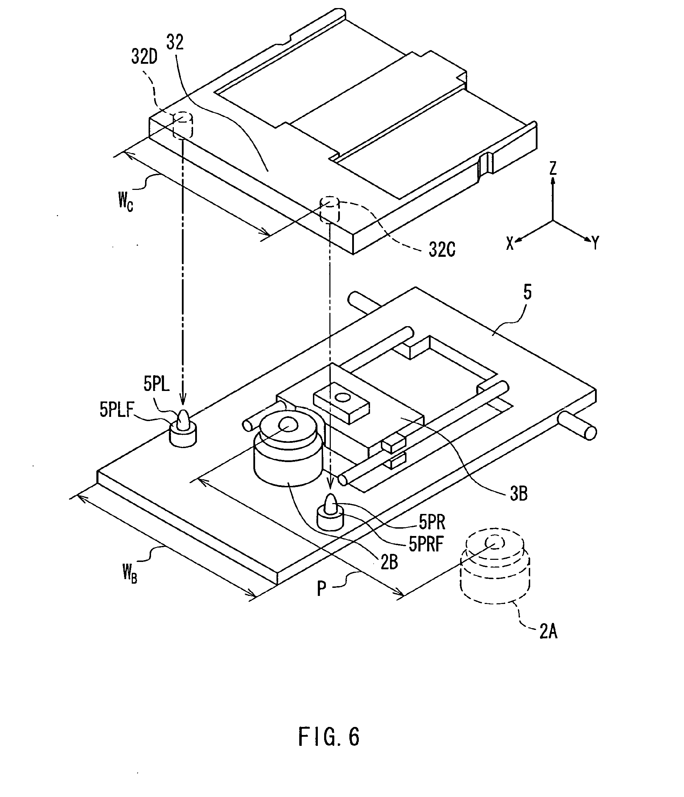

As shown in FIG. 6, a lower surface of the disk cartridge 32 used in the present embodiment is provided with substantially cylindrical or elliptic cylindrical positioning holes 32C and 32D for positioning with respect to the transfer base 5. The positioning holes 32C and 32D respectively fit with positioning pins 5PR and 5PL provided on the transfer base 5, whereby the disk cartridge 32 is positioned. Here, the positioning pins 5PR and 5PL have a secured positional accuracy with respect to the first disk motor 2A (the second disk motor 2B) and the first optical head 3A (the second optical head 3B). Although FIG. 6 only illustrates the positioning pins 5PR and 5PL corresponding to the second disk motor 2B and the second optical head 3B, it also may be possible to provide the positioning pins 5PR and 5PL corresponding to the first disk motor 2A and the first optical head 3A in a similar manner. When the positioning pins 5PR and 5PL are provided on the transfer base 5 as described above, a width WB of the transfer base 5 necessary for the disk cartridge 32 corresponding to these positioning pins 5PR and 5PL has to be equal to or larger than a distance WC between the positioning holes 32C and 32D of the disk cartridge 32. Also, when considering the case in which the disk cartridge 32 is positioned with respect to both of the first disk motor 2A and the second disk motor 2B, the center distance P between the first disk motor 2A and the second disk motor 2B has to be at least approximately equal to or larger than the hole-to-hole distance WC. Further, if two transfer bases 5 each having a width WB equal to or smaller than the width of the disk cartridge 32 are provided, the center distance P can be made smaller than the dimension obtained by adding the radius of the first disk medium 1A and that of the second disk medium 1B. Alternatively, when considering the case in which the transfer base 5 is divided into two as described later, the center distance P sometimes exceeds the dimension obtained by adding the radius of the first disk medium 1A and that of the second disk medium 1B in order to secure the strength of the transfer bases 5 and the operational margins of both the transfer bases 5.

For example, in a specification of disk cartridges used for DVD-RAMs and PDs, the hole-to-hole distance WC is set to be 102 mm. Also, according to this specification, the diameter of these positioning holes 32C and 32D is set to be φ4 mm. Accordingly, adding an installation error of the positional pins 5PR and 5PL, an operational margin of the transfer base 5 or the like to 106 mm, which is the sum of these 102 mm and 4 mm, yields a necessary center distance P of about 110 mm or more. This dimension of 110 mm corresponds to a value about 0.9 times the dimension obtained by adding the radius of the first disk medium 1A and that of the second disk medium 1B. Furthermore, if considering the case in which the transfer base 5 is divided into two as described later, the center distance P sometimes has to be about 130 mm in order to secure the strength of the transfer bases 5 and the operational margins of both the transfer bases 5. This dimension of 130 mm corresponds to a value about 1.1 times the dimension obtained by adding the radius of the first disk medium 1A and that of the second disk medium 1B.

In the disk apparatus of the present embodiment, in the transfer base 5, a first region where the first disk motor 2A and the first optical head 3A are mounted and a second region where the second disk motor 2B and the second optical head 3B are mounted are constituted as one piece. However, for the reason that the first optical head 3A and the second optical head 3B have different heights or the like, in order to set the disk mounting surface of the first disk motor 2A and that of the second disk motor 2B at the time of recording/ reproducing to have different heights, it also is possible to divide these regions by a division line 38 shown in FIG. 1 and allow them to be lifted and lowered individually, for example. Also, in order to reduce the load on the lifting and lowering motor 10 or to avoid the interference with the media tray 19 or the first tray guide 20 and make effective use of the space, the divided transfer bases 5 may be lifted or lowered at different timing.

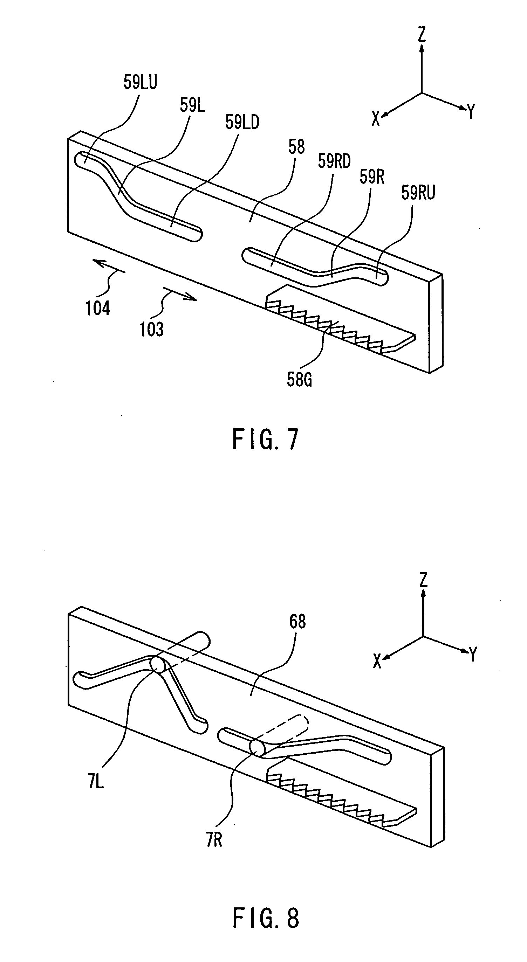

For example, the above-described slide cam 8 may be replaced with a slide cam 58 shown in FIG. 7. With the use of this slide cam 58, the first region and the second region can be lifted and lowered individually by rotating the lifting and lowering motor 10 in opposite directions.

In other words, when the slide cam 58 moves in the direction indicated by the arrow 103, the support pin 7L in FIG. 1 reaches a cam groove upper portion 59LU of a cam groove 59L, whereas the support pin 7R reaches a cam groove lower portion 59RD of a cam groove 59R. Thus, at this time, the first region is lowered, whereas the second region is lifted.

On the other hand, when the slide cam 58 moves in the direction indicated by the arrow 104, the support pin 7L in FIG. 1 reaches a cam groove lower portion 59LD of the cam groove 59L, whereas the support pin 7R reaches a cam groove upper portion 59RU of the cam groove 59R. Thus, at this time, the first region is lifted, whereas the second region is lowered.

In this way, it is possible to lift and lower the first region and the second region individually in an independent manner.

Also, the first region and the second region can be lifted and lowered individually by rotating the lifting and lowering motor 10 in the same direction. To achieve this, it is appropriate to use, for example, a slide cam 68 shown in FIG. 8 instead of the slide cam 8 shown in FIG. 1. While rotating the lifting and lowering motor 10 in one direction, where to stop the lifting and lowering motor 10 is adjusted, thereby lifting only one of the transfer bases and lowering the other.

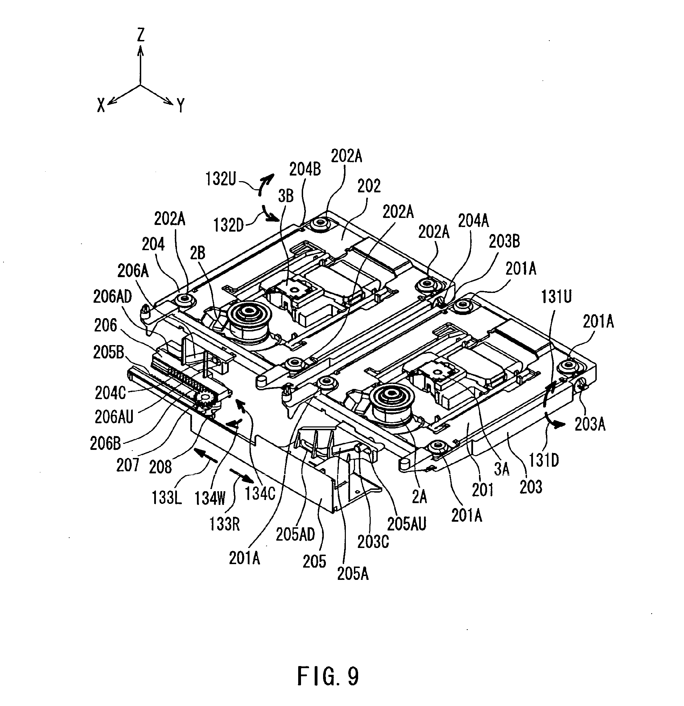

It further is possible to lift and lower the first region and the second region individually in an independent manner by the method described in the following such that one is kept lowered while driving the other to be lifted. Such a method will be explained referring to FIG. 9.

In FIG. 9, the transfer base 5 is divided into the first region and the second region, and numerals 201 and 202 denote a first transfer base and a second transfer base, respectively. The first disk motor 2A and the first optical head 3A are mounted integrally onto the first transfer base 201, and the second disk motor 2B and the second optical head 3B are mounted integrally onto the second transfer base 202. The first transfer base 201 is supported by a first sub-base 203 via four first dampers 201A. Similarly, the second transfer base 202 is supported by a second sub-base 204 via four second dampers 202A. The first sub-base 203 is supported by the mechanical base 15 with a first right rotation spindle 203A and a first left rotation spindle 203B so as to be rotatable in directions indicated by an arrow 131U and an arrow 131D. Similarly, the second sub-base 204 is supported by the mechanical base 15 with a second right rotation spindle 204A and a second left rotation spindle 204B so as to be rotatable in directions indicated by an arrow 132U and an arrow 132D.

It is preferable that vibration characteristics of the first dampers 201A and the second dampers 202A individually are optimized according to the weight of the first transfer base 201 and the second transfer base 202 and the number of revolutions of the first disk motor 2A and the second disk motor 2B, etc. However, they may be the same as long as no problem arises in terms of characteristics.

Numeral 205 denotes a first lifting and lowering plate. In a first cam groove 205A provided in the first lifting and lowering plate 205, a first lifting and lowering pin 203C provided in the first sub-base 203 is fitted. When the first lifting and lowering plate 205 moves in the Y-axis direction, namely, a direction indicated by an arrow 133L or an arrow 133R, the first lifting and lowering pin 203C moves along the first cam groove 205A, so that the first sub-base 203 rotates in the direction indicated by the arrow 131U or the arrow 131D, thereby allowing the first transfer base 201 to be lifted or lowered. The first lifting and lowering plate 205 is provided with a first lifting and lowering rack 205B having a pitch line parallel with the Y-axis direction.

Numeral 206 denotes a second lifting and lowering plate. In a second cam groove 206A provided in the second lifting and lowering plate 206, a second lifting and lowering pin 204C provided in the second sub-base 204 is fitted. When the second lifting and lowering plate 206 moves in the Y-axis direction, namely, the direction indicated by the arrow 133L or the arrow 133R, the second lifting and lowering pin 204C moves along the second cam groove 206A, so that the second sub-base 204 rotates in the direction indicated by the arrow 132U or the arrow 132D, thereby allowing the second transfer base 202 to be lifted or lowered. The second lifting and lowering plate 206 is provided with a second lifting and lowering rack 206B having a pitch line parallel with the Y-axis direction.

Numeral 207 denotes a lifting and lowering gear capable of engaging with the first lifting and lowering rack 205B and the second lifting and lowering rack 206B provided in the first lifting and lowering plate 205 and the second lifting and lowering plate 206, respectively. The lifting and lowering gear 207 rotates in a direction indicated by an arrow 134W or an arrow 134C by the driving force of the lifting and lowering motor 10 shown in FIG. 1, though not shown in FIG. 9. The lifting and lowering gear 207 moves the first lifting and lowering plate 205 and the second lifting and lowering plate 206 in the direction indicated by the arrow 133L or the arrow 133R. The first lifting and lowering rack 205B and the second lifting and lowering rack 206B are arranged such that their pitch lines are parallel with each other and face each other with the lifting and lowering gear 207 interposed therebetween. Both of the first lifting and lowering rack 205B and the second lifting and lowering rack 206B are intermittent racks having an unmating region that lacks teeth at an end on the side of the arrow 133L direction and does not engage with the lifting and lowering gear 207 (details will be described later).

When the lifting and lowering gear 207 engages with the first lifting and lowering rack 205B and rotates in the direction indicated by the arrow 134W, the first lifting and lowering plate 205 moves in the direction indicated by the arrow 133L, so that the first lifting and lowering pin 203C shifts along the first cam groove 205A to a first cam groove upper portion 205AU, allowing the first sub-base 203 to rotate in the direction indicated by the arrow 131U and be lifted. Also, when the lifting and lowering gear 207 engages with the second lifting and lowering rack 206B and rotates in the direction indicated by the arrow 134W, the second lifting and lowering plate 206 moves in the direction indicated by the arrow 133R, so that the second lifting and lowering pin 204C shifts along the second cam groove 206A to a second cam groove lower portion 206AD, allowing the second sub-base 204 to rotate in the direction indicated by the arrow 132D and be lowered.

Similarly, when the lifting and lowering gear 207 engages with the first lifting and lowering rack 205B and rotates in the direction indicated by the arrow 134C, the first lifting and lowering plate 205 moves in the direction indicated by the arrow 133R, so that the first lifting and lowering pin 203C shifts along the first cam groove 205A to a first cam groove lower portion 205AD, allowing the first sub-base 203 to rotate in the direction indicated by the arrow 131D and be lowered. Also, when the lifting and lowering gear 207 engages with the second lifting and lowering rack 206B and rotates in the direction indicated by the arrow 134C, the second lifting and lowering plate 206 moves in the direction indicated by the arrow 133L, so that the second lifting and lowering pin 204C shifts along the second cam groove 206A to a second cam groove upper portion 206AD, allowing the second sub-base 204 to rotate in the direction indicated by the arrow 132U and be lifted.

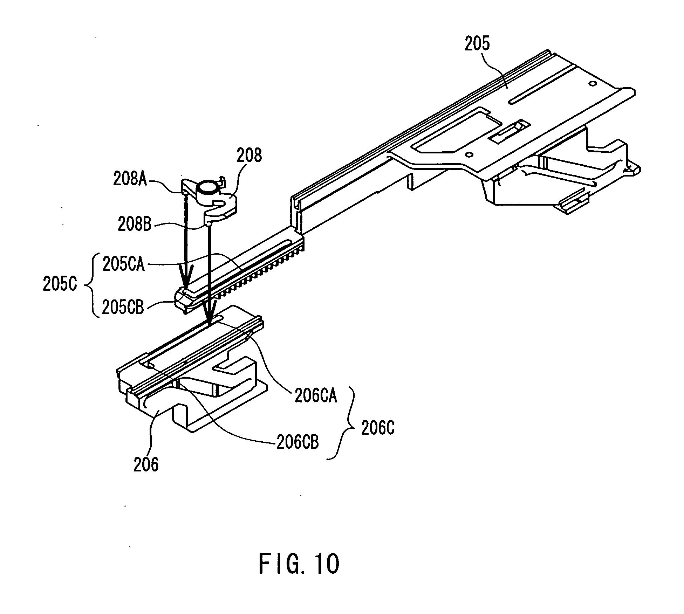

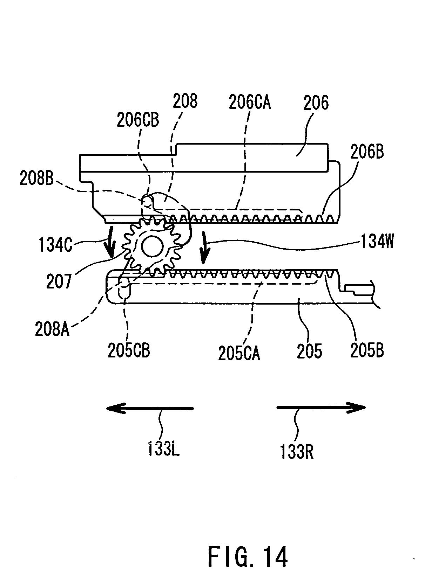

Numeral 208 denotes a switching lever for switching an engagement of the lifting and lowering gear 207 with the first lifting and lowering rack 205B and the second lifting and lowering rack 206B (an engagement switching mechanism). The switching lever 208 is supported rotatably in a manner coaxial with the lifting and lowering gear 207. The principle of switching the engagement will be described referring to FIGs. 10 to 20.

FIG. 10 is an exploded perspective view showing the first lifting and lowering plate 205, the second lifting and lowering plate 206 and the switching lever 208 from a back side of the state illustrated in FIG. 9. The switching lever 208 is provided with a first pin 208A and a second pin 208B, which are guided respectively along a first switching cam groove 205C and a second switching cam groove 206C that are provided in the first lifting and lowering plate 205 and the second lifting and lowering plate 206. The first pin 208A and the second pin 208B are provided equidistantly from an axis of rotation of the switching lever 208. The first switching cam groove 205C is formed of a first straight portion 205CA and a first orthogonal portion 205CB that are connected at right angles in a substantially L shape. Similarly, the second switching cam groove 206C is formed of a second straight portion 206CA and a second orthogonal portion 206CB that are connected at right angles in a substantially-L shape. The first straight portion 205CA and the second straight portion 206CA are parallel with the Y-axis direction.

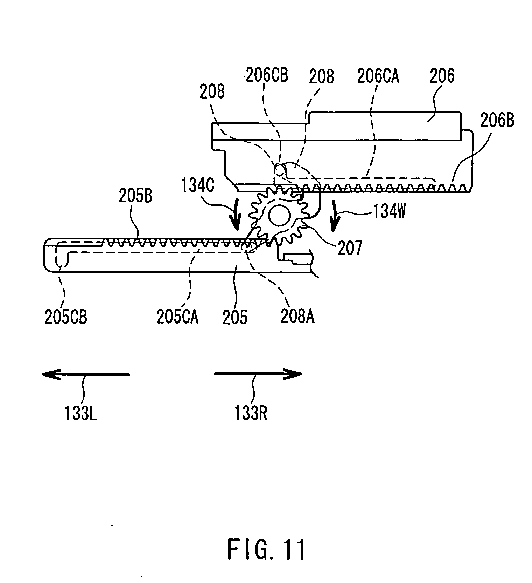

FIGs. 11 to 18 are plan views showing sequentially how the relationship between the switching lever 208 and the first and second switching cam grooves 205C and 206C and the engagement of the lifting and lowering gear 207 vary.

In the state where the first lifting and lowering plate 205 is moved furthest to the side of the arrow 133L, the first lifting and lowering plate 205, the second lifting and lowering plate 206 and the lifting and lowering gear 207 are positioned as shown in FIG. 11 such that the lifting and lowering gear 207 engages with the first lifting and lowering rack 205B in its end portion on the side of the arrow 133R and does not engage with the second lifting and lowering rack 206B. At this time, the first pin 208A is fitted in the first straight portion 205CA, and the second pin 208B is fitted in the second orthogonal portion 206CB. Since the switching lever 208 cannot rotate in a direction indicated by either the arrow 134C or the arrow 134W while the first pin 208A is fitted in the first straight portion 205CA, the fitting state between the second pin 208B and the second orthogonal portion 206CB is not released, so that the movement of the second lifting and lowering plate 206 in both of the directions indicated by the arrow 133L and the arrow 133R is suppressed. In the state shown in FIG. 11, the first lifting and lowering pin 203C shown in FIG. 9 is fitted in the first cam groove upper portion 205AU of the first cam groove 205A, and the first sub-base 203 is rotated in the direction indicated by the arrow 131U. Also, the second lifting and lowering pin 204C is fitted in the second cam groove lower portion 206AD of the second cam groove 206A, and the second sub-base 204 is rotated in the direction indicated by the arrow 132D.

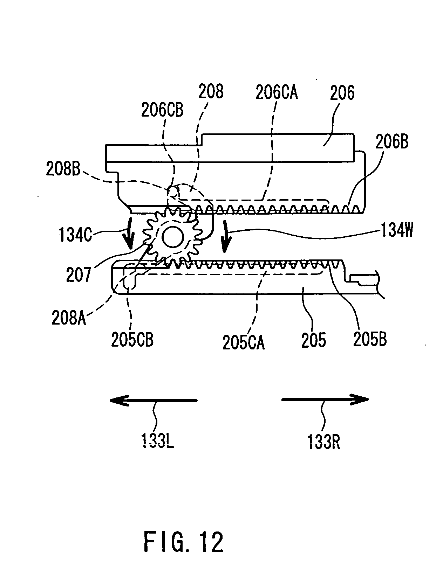

When the lifting and lowering gear 207 rotates in the direction indicated by the arrow 134C from the state shown in FIG. 11, the first lifting and lowering plate 205 moves in the direction indicated by the arrow 133R, thus achieving a positional relationship as shown in FIG. 12 in which the first pin 208A is fitted in the first straight portion 205CA similarly to the state shown in FIG. 11 and the second pin 208B is fitted in the second orthogonal portion 206CB. Therefore, the movement of the second lifting and lowering plate 206 in both of the directions indicated by the arrow 133L and the arrow 133R still is suppressed. In the state shown in FIG. 12, the first lifting and lowering pin 203C shown in FIG. 9 is moved along the first cam groove 205A to the first cam groove lower portion 205AD, and the first sub-base 203 is rotated in the direction indicated by the arrow 131D. The second lifting and lowering pin 204C is fitted in the second cam groove lower portion 206AD of the second cam groove 206A similarly to the state shown in FIG. 11, and the second sub-base 204 is rotated in the direction indicated by the arrow 132D.

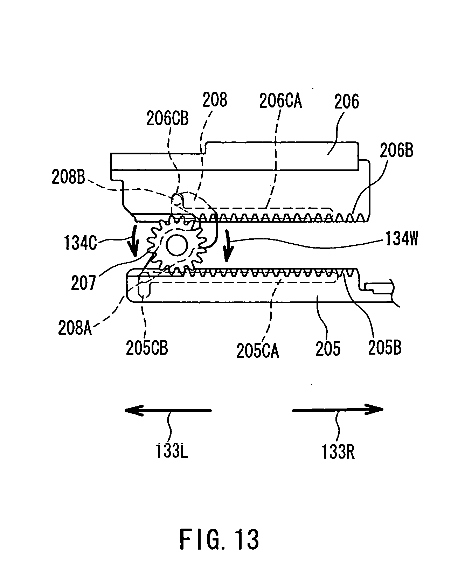

When the lifting and lowering gear 207 further rotates in the direction indicated by the arrow 134C and achieves the state shown in FIG. 13, the lifting and lowering gear 207 and the first lifting and lowering rack 205B start moving out of engagement, and the first pin 208A comes close to the first orthogonal portion 205CB.

When the lifting and lowering gear 207 further rotates in the direction indicated by the arrow 134C, the first pin 208A hits against a sidewall of the first orthogonal portion 205CB and is subjected to a force therefrom in the direction indicated by the arrow 133R. This force rotates the switching lever 208 in the direction indicated by the arrow 134C. At this time, the second pin 208B applies a force in the direction indicated by the arrow 133L to a sidewall of the second orthogonal portion 206CB, thus causing the second lifting and lowering plate 206 to move slightly in the direction indicated by the arrow 133L, so that the lifting and lowering gear 207 moves into engagement with the second lifting and lowering rack 206B. At the same time, the lifting and lowering gear 207 completely moves out of engagement with the first lifting and lowering rack 205B, and thus, the movement of the first lifting and lowering plate 206 in the direction indicated by the arrow 133R stops.

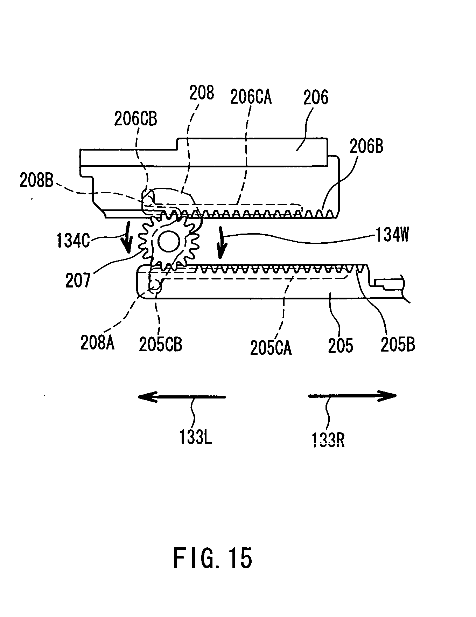

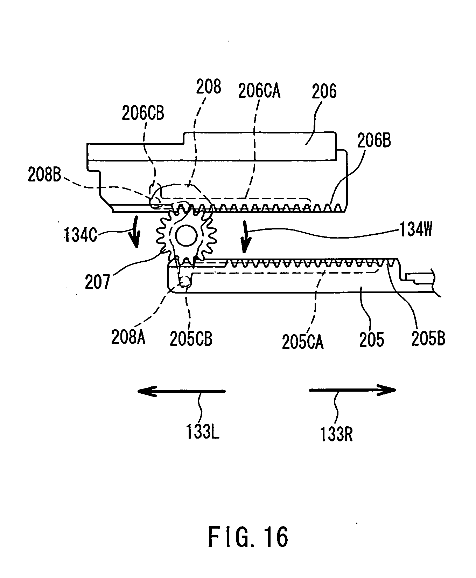

When the lifting and lowering gear 207 further rotates in the direction indicated by the arrow 134C, the second lifting and lowering rack 206B that has just come into engagement with the lifting and lowering gear 207 starts moving in the direction indicated by the arrow 133L. At this time, the second pin 208B is subjected to a force in the direction indicated by the arrow 133L from a sidewall of the second orthogonal portion 206CB. This force rotates the switching lever 208 in the direction indicated by the arrow 134C, so that the first pin 208A enters the first orthogonal portion 205CB as shown in FIG. 15. As the first pin 208A enters the first orthogonal portion 205CB, it moves the first lifting and lowering plate 205 in the direction indicated by the arrow 133R via the orthogonal portion 205CB. When the first pin 208A enters sufficiently deep into the first orthogonal portion 205CB as shown in FIG. 16, the second pin 208B moves out of the second orthogonal portion 206CB and enters the second straight portion 206CA.

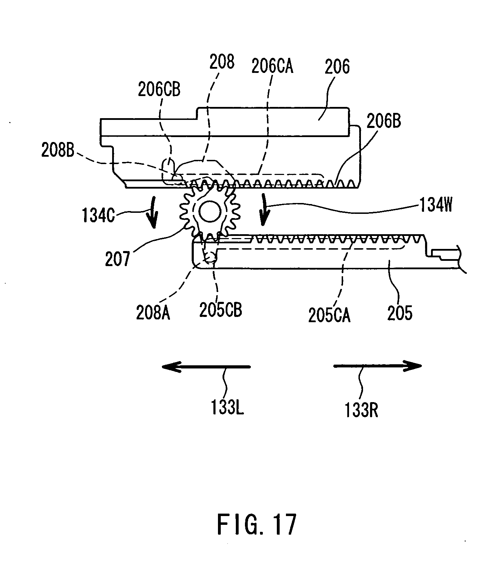

When the second pin 208B moves completely out of the second orthogonal portion 206CB and is fitted in the second straight portion 206CA as shown in FIG. 17, the switching lever 208 cannot rotate in a direction indicated by either the arrow 134C or the arrow 134W, so that the fitting state between the first pin 208A and the first orthogonal portion 205CB is not released. Therefore, the first lifting and lowering plate 205 is latched by the first pin 208A in the first orthogonal portion 205CB and prevented from moving in the direction indicated by either the arrow 133L or the arrow 133R.

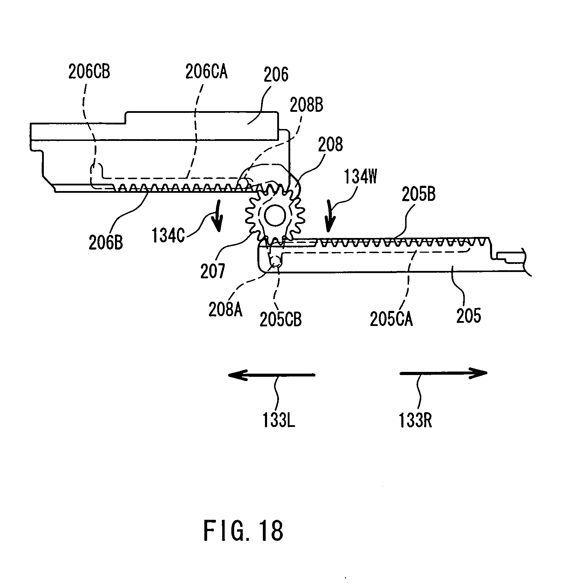

Then, the lifting and lowering gear 207 further rotates in the direction indicated by the arrow 134C, so that the second lifting and lowering plate 206 moves in the direction indicated by the arrow 133L to a position at which the lifting and lowering gear 207 engages with the second lifting and lowering rack 206B in its end portion on the side of the arrow 133R as shown in FIG. 18. In the state shown in FIG. 18, the second lifting and lowering pin 204C shown in FIG. 9 has moved to a cam upper portion 206AU of the second cam groove 206A, and the second sub-base 204 is rotated in the direction indicated by the arrow 132U.

When the lifting and lowering gear 207 is rotated in the direction indicated by the arrow 134W from the state shown in FIG. 18, the above-described operation goes reversely and returns to the state shown in FIG. 11.

As described above, the first transfer base 201 can be lifted and lowered by rotating the first sub-base 203 in the directions indicated by the arrow 131U and the arrow 131D, and the second transfer base 202 can be lifted and lowered by rotating the second sub-base 204 in the directions indicated by the arrow 132U and the arrow 132D. Moreover, respective lifting and lowering operations of the first transfer base 201 and the second transfer base 202 can be carried out independently by using a single common driving source (the lifting and lowering motor 10). Furthermore, while one is kept at rest, the other can be lifted or lowered.

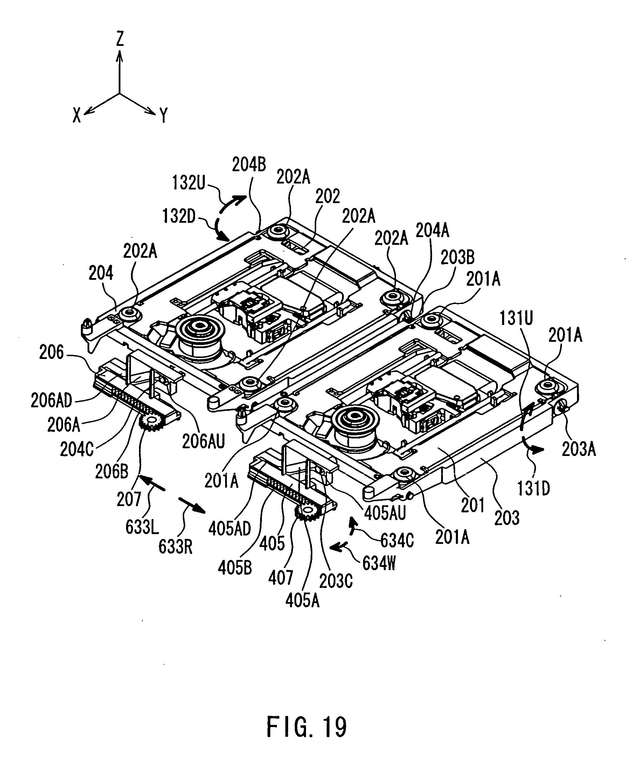

FIGs. 9 to 18 have illustrated an example of driving the first lifting and lowering rack 205B of the first lifting and lowering plate 205 and the second lifting and lowering rack 206B of the second lifting and lowering plate 206 by engaging them with a single common lifting and lowering gear 207, but the present invention is not limited to this. It also may be possible to drive the first lifting and lowering rack 205B and the second lifting and lowering rack 206B by engaging them respectively with different lifting and lowering gears specifically therefor. An example thereof will be described referring to FIG. 19.

In FIG. 19, the first lifting and lowering plate 205 in FIG. 9 is replaced by a first lifting and lowering plate 405 having substantially the same specification with the second lifting and lowering plate 206. A first lifting and lowering rack 405B provided in the first lifting and lowering plate 405 engages with a first lifting and lowering gear 407, which is different from the second lifting and lowering gear 207. The first lifting and lowering gear 407 is driven by a motor different from the motor for driving the second lifting and lowering gear 207. The second lifting and lowering gear 207 is driven by a driving system similar to that in the case of FIG. 9. The rotation of the first lifting and lowering gear 407 and that of the second lifting and lowering gear 207 are switched ON/OFF by controlling the driving of the respective motors electrically. Thus, the switching lever 208 in FIG. 9 is not needed in the structure of FIG. 19. Further, although the unmating region that does not engage with the lifting and lowering gear 207 is provided in the first lifting and lowering rack 205B and the second lifting and lowering rack 206B in FIG. 9, it is not needed in the structure of FIG. 19.

The following is a description of an operation in the structure of FIG. 19.

When the first lifting and lowering gear 407 is driven rotationally in a direction indicated by an arrow 634C, the first lifting and lowering plate 405 moves in a direction indicated by an arrow 633L, the first lifting and lowering pin 203C shifts along a first cam groove 405A provided in the first lifting and lowering plate 405 to a first cam groove upper portion 405AU, and the first sub-base 203 is rotated in the direction indicated by the arrow 131U and lifted. Reversely, when the first lifting and lowering gear 407 is driven rotationally in the direction indicated by an arrow 634W, the first lifting and lowering plate 405 moves in a direction indicated by an arrow 633R, the first lifting and lowering pin 203C shifts along the first cam groove 405A to a first cam groove lower portion 405AD, and the first sub-base 203 is rotated in the direction indicated by the arrow 131D and lowered.

Similarly to the above, the second lifting and lowering gear 207 is driven rotationally, thereby lifting and lowering the second sub-base 204.

As described above, the first transfer base 201 can be lifted and lowered by rotating the first sub-base 203 in the directions indicated by the arrow 131U and the arrow 131D, and the second transfer base 202 can be lifted and lowered by rotating the second sub-base 204 in the directions indicated by the arrow 132U and the arrow 132D. Moreover, respective lifting and lowering operations of the first transfer base 201 and the second transfer base 202 can be carried out independently. Furthermore, while one is kept at rest, the other can be lifted or lowered.

Now, the following is a description of how to remove dust adhering to an upper surface of a lens provided in the first optical head 3A and the second optical head 3B in the disk apparatus of the present embodiment. It should be noted that this description is applicable similarly to both of the configuration in which the transfer base 5 in FIG. 1 is divided and that in which the transfer base 5 is not divided.

In the disk apparatus of the present embodiment, the entry of dust into the apparatus is prevented by covering the apparatus with the top cover 40. However, it is impossible to block completely the entry of dust while mounting and removing an optical disk medium using the tray 19, so that dust gradually accumulates in the apparatus. In particular, if the dust adheres to the upper surface of the lens provided in the first optical head 3A and the second optical head 3B, the recording or reproducing performance is likely to deteriorate considerably. In order to restore such a performance deterioration, removing the dust adhering to the upper surface of the lens is effective.

In a conventional disk apparatus, a clamper unit 34 and a tray 19 are disposed above the optical head. Since the clamper unit 34 and the tray 19 are not configured to be moved aside temporarily so as to expose the upper surface of the lens, they have to be detached once for removing the dust adhering to the upper surface of the lens.

The disk apparatus in the present embodiment can solve this problem as follows.

First, the top cover 40 is detached from the apparatus. At this time, the first tray guide 20 that is formed as one piece with the tray 19 may be located in any of the first region, the second region and an intermediate region between them. Thus, of the lenses provided respectively in the first optical head 3A and the second optical head 3B, the lens to be cleaned is not always exposed. Accordingly, in the case where the desired lens from which dust is to be removed is not exposed, an electric current is passed through the second conveying and driving motor 22 so as to activate this motor, thereby moving the first tray guide 20 suitably in either direction of the Y-axis direction.

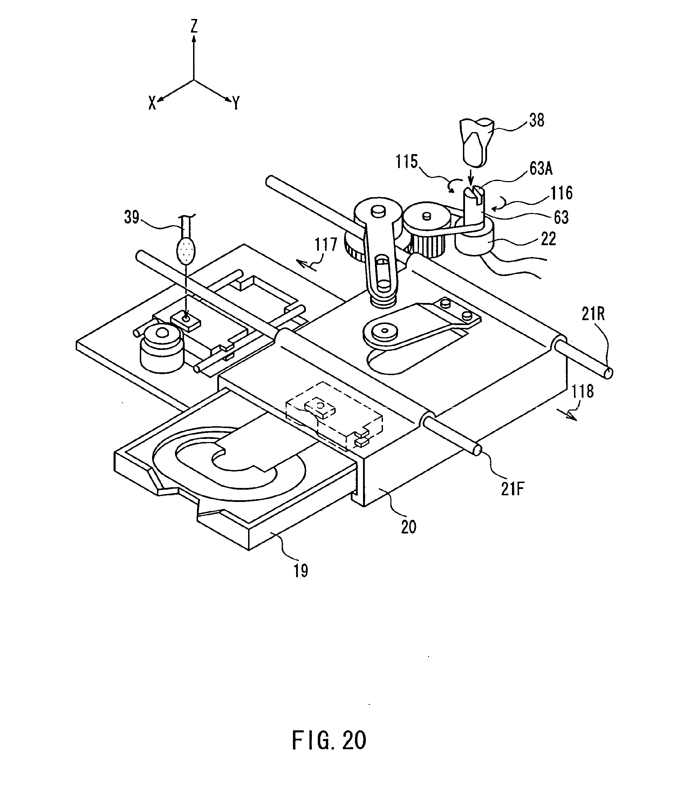

At this time, if it is possible to drive the motor 22 manually without passing an electric current therethrough, the risk of an electric shock caused by the current passage can be avoided. FIG. 20 illustrates a concept of a structure enabling this.

In FIG. 20, an improved second conveying and driving motor pulley 63 obtained by improving the second conveying and driving motor pulley 23 in FIG. 1, for example, providing a slot 63A in which a flatblade screwdriver 38 can be fitted is used. This improved second conveying and driving motor pulley 63 is rotated in a direction indicated by an arrow 115 or an arrow 116, thereby conveying the first tray guide 20 via a driving system meshing therewith in a direction indicated by an arrow 117 or an arrow 118. In this manner, it becomes possible to rotate the improved second conveying and driving motor pulley 63 simply with the flatblade screwdriver without passing an electric current through the conveying and driving motor 22 for activation. The second tray guide 20 can be moved suitably in this manner, allowing dust adhering to each of the first optical head 3A and the second optical head 3B to be removed with a cleaning tool, for example, a cotton swab 39 as shown in FIG. 20.

Incidentally, in the disk apparatus of the present embodiment, a mechanism for releasing the cartridge shutter 32A provided in the disk cartridge 32 is not limited to the above-described structure but can be other known methods. In such cases, an effect similar to the above also can be obtained.

Further, in the disk apparatus of the present embodiment, the first disk motor 2A and the first optical head 3A do not have noticeable difference in shape from the second disk motor 2B and the second optical head 3B in the figures. However, the shape, dimension or the like thereof is not necessarily the same but may be determined according to optical disk media with respect to which recording and/or reproducing is to be performed. In such cases, an effect similar to the above also can be obtained.

In the disk apparatus of the present embodiment, the driving system for conveying the media tray 19 in the X-axis direction (the direction indicated by the arrow 105 or the arrow 106) with respect to the first tray guide 20, the driving system for conveying the first tray guide 20 integrally with the media tray 19 in the Y-axis direction (the direction indicated by the arrow 107 or the arrow 108) along the second tray guides 21F and 21R and the driving system for conveying the slide cam 8 in the Y-axis direction (the direction indicated by the arrow 103 or the arrow 104) so as to lift and lower the transfer base 5 are provided individually in an independent manner. However, part of or all of these driving systems can be made to share a common function so as to operate individual parts together, thereby reducing the number of motors and carrying out the operations sequentially. This is effective in that misoperations can be prevented.

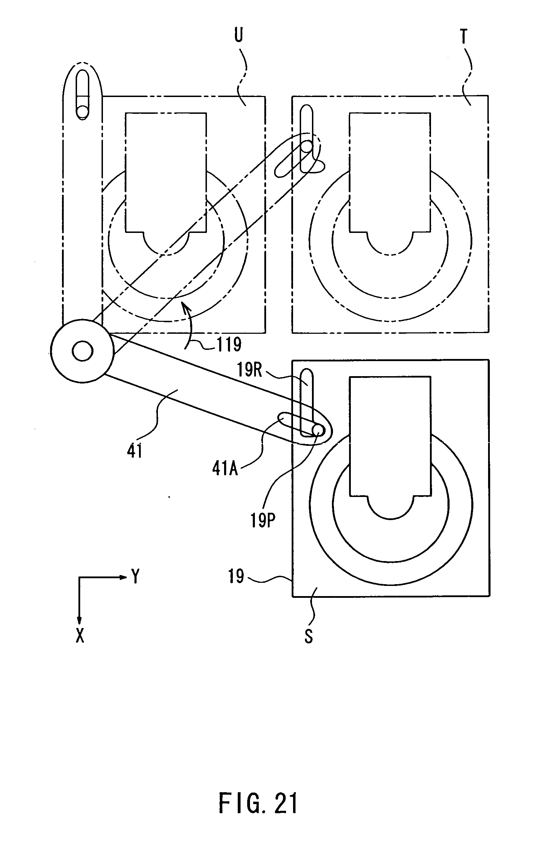

FIG. 21 illustrates an example of the structure for such operations. Numeral 41 denotes a tray arm, which is provided with a groove 41A. Further, the tray 19 is provided with an L-shaped cam groove 19R. A pin 19P is provided movably along this cam groove 19R. In FIG. 21, an S position is a position at which the tray 19 is ejected from the apparatus so as to allow an optical disk medium to be mounted or removed (a third tray position), a T position is a position at which the tray 19 is inserted from the S position into the apparatus so as to allow the first optical head 3A to perform recording and/or reproducing with respect to the first optical disk medium 1A (a first tray position), and a U position is a position at which the tray 19 is conveyed from the T position inside the apparatus so as to allow the second optical head 3B to perform recording and/or reproducing with respect to the second optical disk medium 1B (a second tray position). When the tray arm 41 is rotated in a direction indicated by an arrow 119 by a driving source (not shown) from the state in which the tray 19 is at the S position, the driving force is transmitted via the groove 41A, the pin 19P and the cam groove 19R to the tray 19, so that the tray 19 first is moved to the T position. When the tray arm 41 further is rotated in the direction indicated by the arrow 119, the tray 19 similarly is moved to the U position.

In the disk apparatus of the present embodiment, an optical disk medium is mounted and removed by moving the media tray 19 along the X-axis direction and ejecting the media tray 19 from the apparatus and inserting the same. The media tray 19 moves along the X-axis direction as noted above always in the first region. In other words, when an optical disk medium is mounted on the media tray 19 that has been ejected from the apparatus, the tray is guided by the first tray guide 20, moves in the direction indicated by the arrow 106 in FIG. 1 and then is received in the apparatus. At this time, the optical disk medium is above the first disk motor 2A. Even in the case where this optical disk medium is the second optical disk medium 1B corresponding to the second disk motor 2B and the second optical head 3A, it always is conveyed along the X axis over the first disk motor 2A and then conveyed along the Y axis to a position above the second disk motor 2B. When removing the second optical disk medium 1B, the media tray 19 also moves along the Y axis to a position above the first disk motor 2A and then moves along the X axis so as to be ejected from the apparatus. With this structure, although the operational time for activation and ejection for the first optical disk medium 1A decreases, that for the second optical disk medium 1B increases.

The present invention is not limited to such a structure. By adjusting suitably a phase of a start position of the rotation of, in particular, the conveying and driving arm 26 in the second tray conveying and driving system, it is possible to change suitably the position of the media tray 19 in the Y-axis direction when this media tray 19 is guided by the first tray guide 20 and moves along the X axis. For example, setting this position to be midway between the center of rotation of the first disk motor 2A and that of the second disk motor 2B is effective in terms of the symmetry of the apparatus.

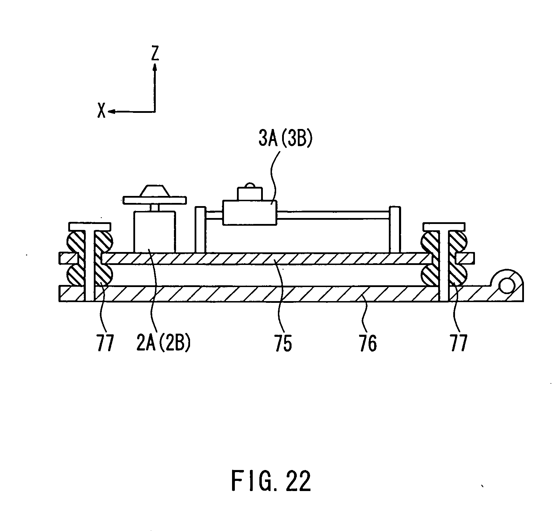

Furthermore, in the disk apparatus of the present embodiment, the mechanical base 15 on which the transfer base 5, the slide cam 8, the second conveying and driving motor 22, the lifting and lowering motor 10, etc. are mounted is attached to the chassis 18 via the dampers 16. In other words, the disk apparatus has a configuration in which the mechanical base 15 and the members above entirely are on a movable side and the chassis 18 is on a fixed side with the dampers 16 being the border and supporting a relatively large weight. The present invention is not limited to this configuration but may have other configurations depending on required vibration characteristics. For example, as shown in FIG. 22, the transfer base 5 may have a double-layered structure in which a main base 75 on which the first disk motor 2A (or the second disk motor 2B) and the first optical head 3A (or the second optical head 3B) are mounted integrally is attached to a sub-base 76 via dampers 77, so that the dampers 77 support a relatively small weight.

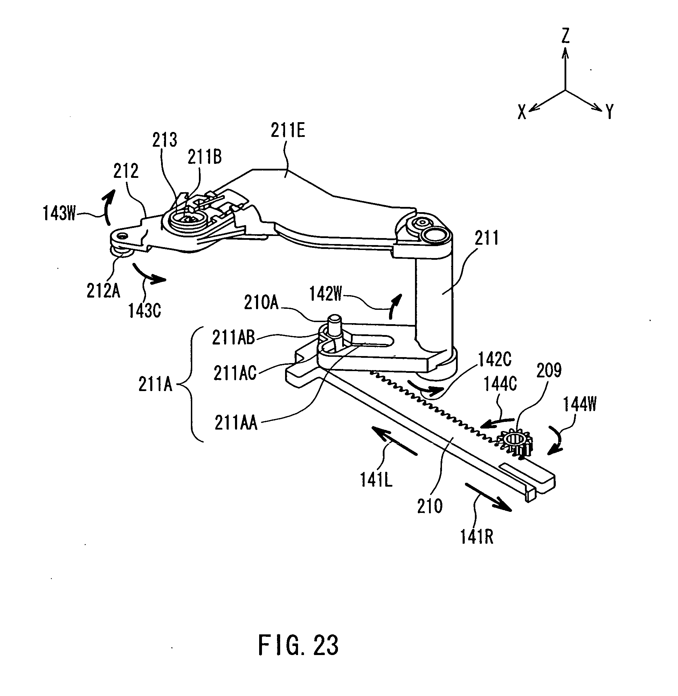

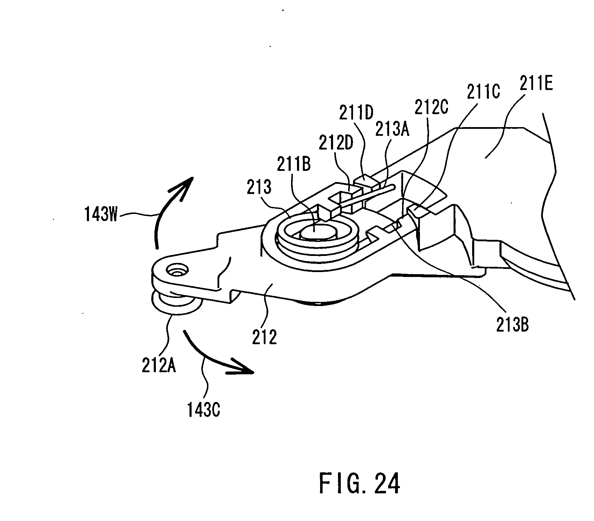

Next, another example of the driving mechanism for conveying the first tray guide 20 and the media tray 19 as one piece in the Y-axis direction (the direction indicated by the arrow 107 and the arrow 108) will be described with reference to FIGs. 23 and 24.

In FIG. 23, numeral 209 denotes a second conveying and driving intermediate gear that receives a driving force transmitted from a second conveying and driving motor (not shown) serving as a driving source, numeral 210 denotes a second conveying rack that receives the driving force transmitted from the second conveying and driving intermediate gear 209 and moves in the Y-axis direction (a direction indicated by an arrow 141R or an arrow 141L), numeral 211 denotes a second conveying and driving lever that is supported rotatably around an axis of rotation parallel with the Z axis, receives the driving force transmitted from the second conveying rack 210 and rotates in a direction indicated by an arrow 142W or an arrow 142C, and numeral 212 denotes a second sub-lever that is supported rotatably around a sub-lever spindle 211B provided at a front end of an arm 211E of the second conveying and driving lever 211. A connecting portion 212A provided at a front end of the second sub-lever 212 is connected to the first tray guide 20. When the second conveying and driving lever 211 rotates, the first tray guide 20 is conveyed along the Y-axis direction (the direction indicated by the arrow 107 or the arrow 108).

The second conveying rack 210 is provided integrally with a second conveying rack pin 210A. The second conveying rack pin 210A mates with a second conveying cam groove 211A provided in the second conveying and driving lever 211. When the second conveying and driving intermediate gear 209 rotates in a direction indicated by an arrow 144W or an arrow 144C, the second conveying rack 210 is moved in the direction indicated by the arrow 141L or the arrow 141R, whereby the second conveying rack pin 210A that moves as one piece with the second conveying rack 210 rotates the second conveying and driving lever 211 in the direction indicated by the arrow 142W or the arrow 142C.

The second conveying cam groove 211A includes a radial cam 211AA extending radially with respect to the center of rotation of the second conveying and driving lever 211 and front end cams 211AB and 211AC bifurcating at a front end portion of the radial cam 211AA.

Numeral 213 denotes a second conveying and driving spring formed of a helical torsion coil spring. As shown in FIG. 24, with its center substantially corresponding to the sub-lever spindle 211B, the second conveying and driving spring 213 is held by the second sub-lever 212 such that arm portions 213B and 213A at its both ends are latched by a protrusion 212C and a protrusion 212D. The protrusion 212C and the protrusion 212D are provided in the second sub-lever 212 so as to face each other. Furthermore, the arm portions 213B and 213A of the second conveying and driving spring 213 are latched by a protrusion 211C and a protrusion 211D that are provided in the second conveying and driving lever 211 so as to face each other. Accordingly, the rotation phase of the second sub-lever 212 around the sub-lever spindle 211B with respect to the arm 211E of the second conveying and driving lever 211 is determined elastically by the second conveying and driving spring 213 at a predetermined position.

In FIG. 23, when the second conveying rack pin 210A mates with the second conveying cam groove 211A at the radial cam 211AA, the rotation of the second conveying and driving intermediate gear 209 in the direction indicated by the arrow 144W (or the direction indicated by the arrow 144C) causes the second conveying rack 210 to move in the direction indicated by the arrow 141L (or the direction indicated by the arrow 141R), so that the second conveying rack pin 210A rotates the second conveying and driving lever 211 via the second conveying cam groove 211A in the direction indicated by the arrow 142W (or the direction indicated by the arrow 142C). At the same time, the second conveying rack pin 210A moves along the radial cam 211AA and reaches the bifurcating portion of the front end cam 211AB and the front end cam 211AC. Since the second conveying and driving lever 211 is subjected to a biasing force in the direction indicated by the arrow 142C (or the direction indicated by the arrow 142W), which is opposite to its rotating direction, as a reaction force of a load, the second conveying rack pin 210A enters the front end cam 211AB (or the front end cam 211AC).

In this manner, the second conveying rack pin 210A mates with the second conveying cam groove 211A at the front end cam 211AB when the first tray guide 20 and the media tray 19 move as one piece to a terminal end in the direction indicated by the arrow 108, and the second conveying rack pin 210A mates with the second conveying cam groove 211A at the front end cam 211AC when the first tray guide 20 and the media tray 19 move as one piece to a terminal end in the direction indicated by the arrow 107.

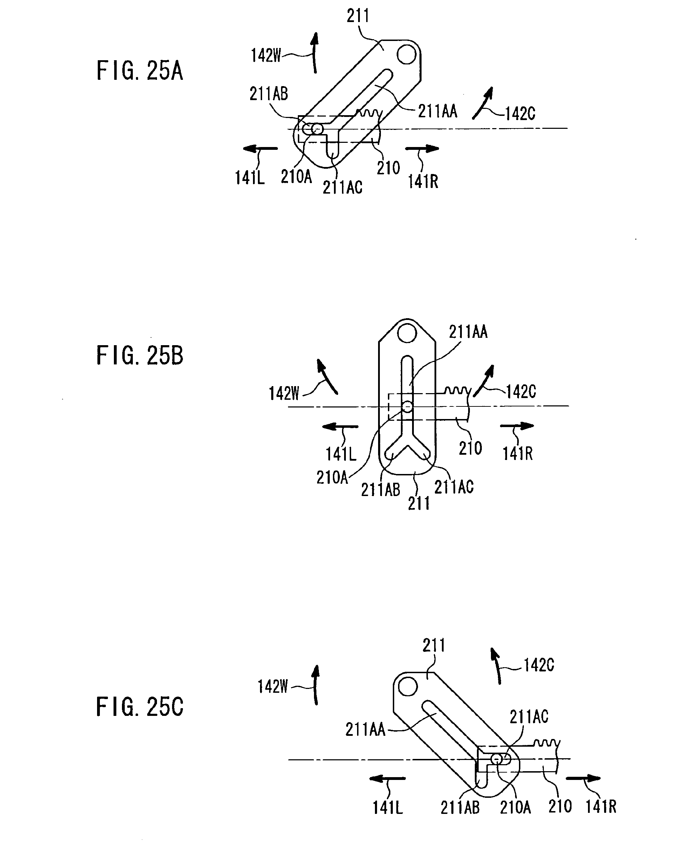

FIGs. 25A to 25C illustrate how the mating of the second conveying rack pin 210A and the second conveying cam groove 211A varies from the state in which the second conveying and driving lever 211 is rotated furthest to the side of the direction indicated by the arrow 142W to that in which the second conveying and driving lever 211 is rotated furthest to the side of the direction indicated by the arrow 142C. Referring to these figures, the function of the "Y"-shaped second conveying cam groove 211A will be described.

The description below is directed to the case where a shock from the outside of the disk apparatus is experienced in the state shown in FIG. 25B, so that the first tray guide 20 is subjected to an external force in the direction indicated by the arrow 107 or the arrow 108 in FIG. 1. A rotational force in the direction indicated by the arrow 142W or the arrow 142C is applied to the second conveying and driving lever 211 via the second sub-lever 212. At this time, the action direction of the force that the radial cam 211AA applies to the second conveying rack pin 210A coincides with the direction in which the second conveying and driving rack 210 moves (the direction indicated by the arrow 107 or the arrow 108). Therefore, the second conveying and driving rack 210 inevitably moves in the direction indicated by the arrow 141L or the arrow 141R. As a result, a power transmitting system including the second conveying and driving intermediate gear 209 for driving the second conveying and driving rack 210 may be damaged.

On the other hand, the description below is directed to the case where a shock from the outside of the disk apparatus is experienced in the state shown in FIG. 25A, so that the first tray guide 20 is subjected to the external force in the direction indicated by the arrow 107 or the arrow 108 in FIG. 1. Similarly to the above, the rotational force in the direction indicated by the arrow 142W or the arrow 142C is applied to the second conveying and driving lever 211. At this time, the action direction of the force that the front end cam 211AB applies to the second conveying rack pin 210A is orthogonal to the direction in which the second conveying and driving rack 210 moves (the direction indicated by the arrow 107 or the arrow 108). Therefore, the second conveying and driving rack 210 does not move in the direction indicated by the arrow 141L or the arrow 141R. As a result, the power transmitting system including the second conveying and driving intermediate gear 209 for driving the second conveying and driving rack 210 is not subjected to a force and can be prevented from being damaged. This also applies to the case as shown in FIG. 25C in which the second conveying rack pin 210A mates with the front end cam 211AC.

In a normal operation of the disk apparatus of the present embodiment, after the media tray 19 reaches the first tray position or the second tray position as described above, its power is turned OFF. In the case of conveying or moving the disk apparatus, there is a possibility that an external shock is applied to the disk apparatus. At this time, since the power usually is OFF, the media tray 19 is at the first tray position or the second tray position. In the case of using the above-described "Y"-shaped second conveying cam groove 211A, when the media tray 19 is at the first tray position or the second tray position described above, the second conveying rack pin 210A mates with the front end cam 211AC or the front end cam 211AB. Therefore, even if an external shock caused an inertial force in the direction indicated by the arrow 107 or the arrow 108 to act on the first tray guide 20 and the media tray 19, the first tray guide 20 and the media tray 19 would not move and their driving system would not be damaged.

Next, the function of the second sub-lever 212 held elastically by the second conveying and driving spring 213 will be described.

When the second conveying rack pin 210A mates with the second conveying cam groove 211A at the radial cam 211AA so as to allow the first tray guide 20 and the media tray 19 to be driven in the direction indicated by the arrow 107 (or the direction indicated by the arrow 108), the rotation phase of the second sub-lever 212 with respect to the second conveying and driving lever 211 is substantially neutral. When the second conveying and driving lever 211 further rotates in the direction indicated by the arrow 142C (or the direction indicated by the arrow 142W) from this state, the second rack pin 210A mates with the front end cam 211AC (or the front end cam 211AB). Thereafter, the first positioning portion 20CR (or the second positioning portion 20CL) of the first tray guide 20 contacts the first right and left positioning portion 42R (or the second right and left positioning portion 42L). After this contact, the second conveying and driving lever 211 further rotates in the direction indicated by the arrow 142C (or the direction indicated by the arrow 142W) slightly. At this time, the second conveying and driving spring 213 elastically deforms with the arm portion 213B (or 213A) pressing against the protrusion 211C (or the protrusion 211D), and the second sub-lever 212 rotates with respect to the second conveying and driving lever 211. This rotation of the second sub-lever 212 absorbs the above-mentioned rotation of the second conveying and driving lever 211 after the contact. Consequently, the first tray guide 20 is positioned such that the elastic biasing force of the second conveying and driving spring 213 keeps the first positioning portion 20CR (or the second positioning portion 20CL) in contact with the first right and left positioning portion 42R (or the second right and left positioning portion 42L). Thus, the first tray guide 20 can be moved reliably to the terminal end in the direction indicated by the arrow 107 (or the direction indicated by the arrow 108) and positioned with a high positional accuracy.

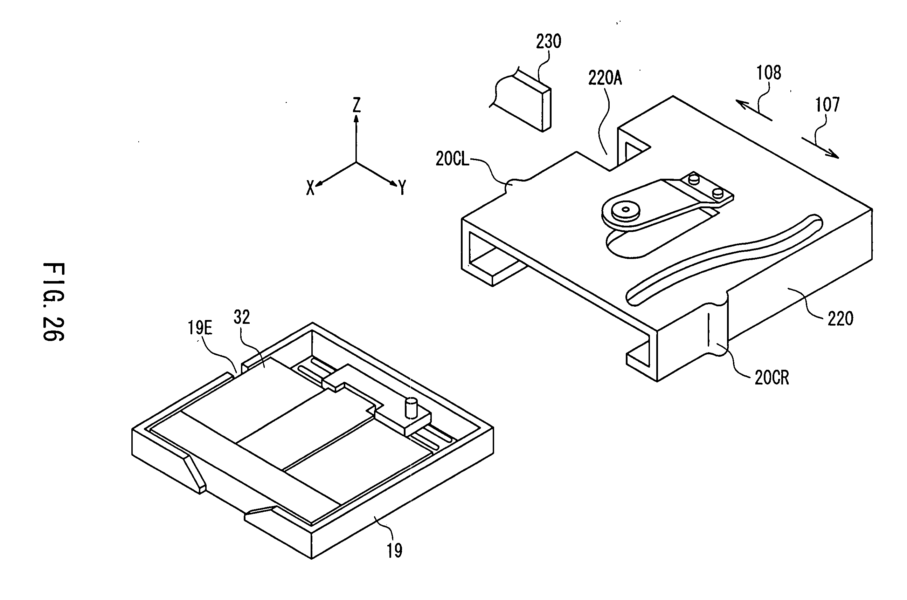

In the configuration shown in FIG. 1, the first tray guide 20 is positioned such that the first positioning portion 20CR (or the second positioning portion 20CL) is in contact with the first right and left positioning portion 42R (or the second right and left positioning portion 42L) at the terminal end of movement in the direction indicated by the arrow 107 (or the direction indicated by the arrow 108). However, the present invention is not limited to this configuration. Particularly, in the case where the disk cartridge 32 is mounted on the media tray 19, the positioning at the terminal end of movement in the direction indicated by the arrow 107 (or the direction indicated by the arrow 108) can be carried out by another method, which will be described referring to FIG. 26.

In FIG. 26, numeral 220 denotes a first tray guide according to another example. This first tray guide 220 is different from the first tray guide 20 described above in that a lateral surface in the direction indicated by the arrow 108 is provided with an opening 220A. Further, a notch 19E is formed in the tray 19 at a position facing the opening 220A when the tray 19 is received in the first tray guide 220. Thus, when the tray 19 on which the disk cartridge 32 is mounted is received in the first tray guide 220, a lateral surface of the disk cartridge 32 is exposed through the opening 220A and the notch 19E. Additionally, the mechanical base 15 (see FIG. 1) is provided with a disk cartridge positioner 230 that is fitted into the opening 220A and the notch 19E so as to contact the lateral surface of the disk cartridge 32 when the first tray guide 220 is moved to the terminal end in the direction indicated by the arrow 108. Therefore, the disk cartridge 32 is positioned accurately by the disk cartridge positioner 230 at the terminal end of movement in the direction indicated by the arrow 108. In the case where the disk cartridge 32 is positioned by the disk cartridge positioner 230, the right and left positioner 42L shown in FIG. 1 and the second positioning portion 20CL are provided at positions such that the former does not contact the latter.

A structure symmetrical with the above also may be provided in the tray guide 220 on the side in the direction indicated by the arrow 107 so that a similar positioning can be performed at the terminal end of movement in the direction indicated by the arrow 107. In other words, an opening similar to the opening 220A is formed in the lateral surface of the first tray guide 220 in the direction indicated by the arrow 107, and a notch similar to the notch 19E further is formed in the tray 19 at a position facing this opening when the tray 19 is received in the first tray guide 220. Moreover, the mechanical base 15 (see FIG. 1) is provided with a positioner similar to the disk cartridge positioner 230. In this case, this positioner contacts the lateral surface of the disk cartridge 32 in the direction indicated by the arrow 107 when the first tray guide 220 is moved to the terminal end in the direction indicated by the arrow 107.

As described above, in accordance with the structure shown in FIG. 26, it is possible to position the disk cartridge 32 with respect to the mechanical base 15 along the Y-axis direction in an accurate manner.

Now, the relationship between the positioning pins 5PR and 5PL shown in FIG. 6 and the media tray 19 will be described.

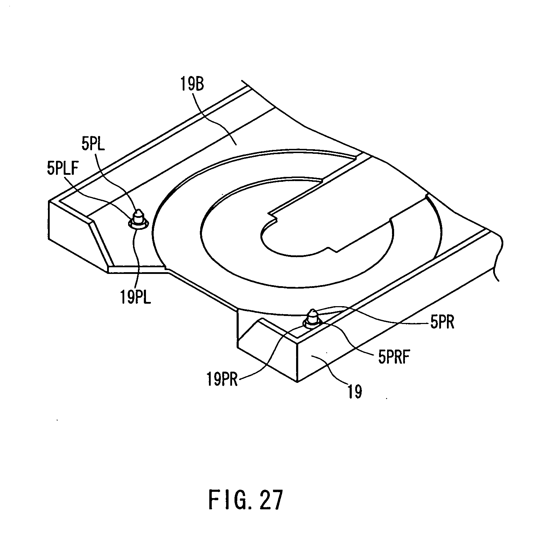

In the disk apparatus of the present invention, basal portions of the positioning pin 5PR and the positioning pin 5PL are provided with a seating 5PRF and a seating 5PLF that are substantially parallel with the disk surface as shown in FIG. 6. When the transfer base 5 is lifted, the surface of the disk cartridge 32 sits on these seatings 5PRF and 5PLF, thereby securing accuracy for the height of the disk cartridge 32. Further, in the state where the first optical disk medium 1A (or the second optical disk medium 1B) contained in the disk cartridge 32 is mounted on the first disk motor 2A (or the second disk motor 2B), the positioning pin 5PR and the positioning pin 5PL pass through a positioning pin hole 19PR and a positioning pin hole 19PL provided in the media tray 19 as shown in FIG. 27, so that the seating 5PRF and the seating 5PLF protrude beyond a bottom surface 19B of the tray. In this way, the surface of the disk cartridge 32 does not contact the bottom surface 19B and reliably sits on the seating 5PRF and the seating 5PLF.

When seen from the direction perpendicular to the disk surface, there preferably is a clearance of about 0.2 to 1.5 mm between inner peripheral surfaces of the positioning pin holes 19PR and 19PL and outer peripheries of the seatings 5PRF and 5PLF. The reason follows.

If there is no clearance between the inner peripheral surfaces of the positioning pin holes 19PR and 19PL and the outer peripheries of the seatings 5PRF and 5PLF for the insertion and removal of the seatings 5PRF and 5PLF with respect to the positioning pin holes 19PR and 19PL, the holes and the seatings interfere with each other. For achieving an operation without interference, it is preferable that a clearance of at least about 0.2 mm is provided.

Furthermore, in the disk apparatus of the present embodiment, the media tray 19 can be moved in the X-axis direction and the Y-axis direction as shown in FIG. 1. In order to prevent the media tray 19 from moving in the X-axis direction or the Y-axis direction by the inertial force caused by an external shock experienced when the apparatus is not in operation, rotating the transfer base 5 in the direction indicated by the arrow 101 in FIG. 1 so as to pass the positioning pins 5PR and 5PL through the positioning pin holes 19PR and 19PL is effective. From this viewpoint, the clearance between the inner peripheral surfaces of the positioning pin holes 19PR and 19PL and the outer peripheries of the seatings 5PRF and 5PLF preferably is small because an excessively large clearance cannot suppress the shock-derived movement of the media tray 19.

However, in the structure shown in FIG. 9, for example, the first transfer base 201 (or the second transfer base 202) is attached to the first sub-base 203 (or the second sub-base 204) via the first dampers 201A (or the second dampers 202A). Thus, the first transfer base 201 (or the second transfer base 202) also floats from the media tray 19 via the first dampers 201A (or the second dampers 202A). Accordingly, the relative position between the first transfer base 201 (or the second transfer base 202) and the media tray 19 is movable by the first dampers 201A (or the second dampers 202A). The movable amount generally is about 1.5 mm at most in this kind of disk apparatus of the present embodiment. Therefore, if the clearance between the inner peripheral surfaces of the positioning pin holes 19PR and 19PL and the outer peripheries of the seatings 5PRF and 5PLF is set to be equal to or smaller than about 1.5 mm, it is possible to achieve an effect of suppressing the shock-derived movement of the media tray 19 while maintaining the function of the first dampers 201A (or the second dampers 202A).

Hereinafter, the case of using a disk cartridge of another mode in the disk apparatus of the present invention will be described. The disk cartridge of this mode is disclosed in JP 2001-332058 A, for example.

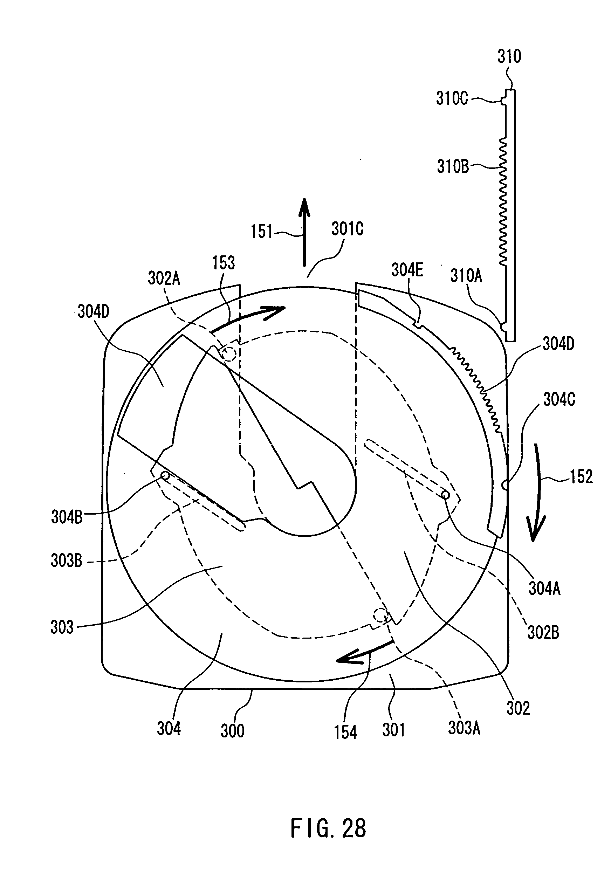

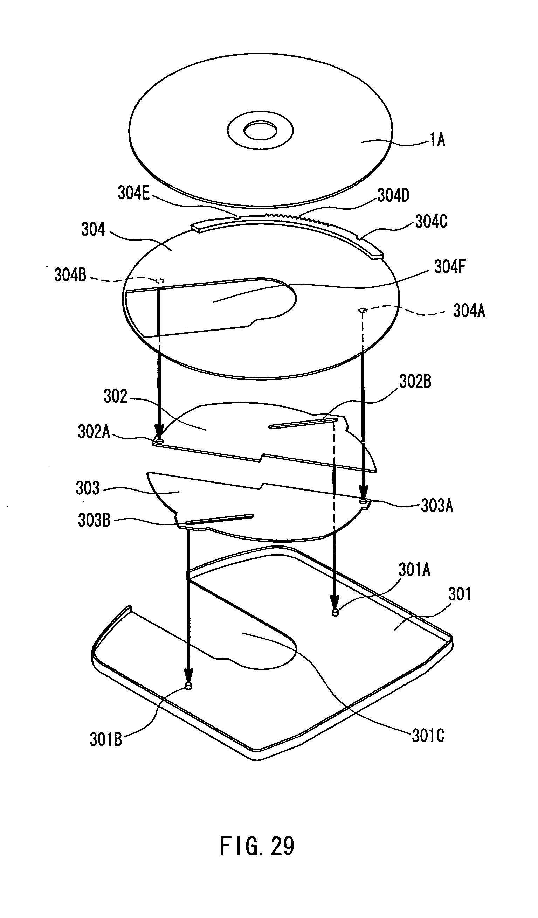

FIG. 28 is a plan view showing a schematic structure of a second disk cartridge 300 of another mode, and FIG. 29 is an exploded perspective view showing the structure of the second disk cartridge 300 shown in FIG. 28.

In FIGs. 28 and 29, numeral 301 denotes a cartridge case for containing a disk, numerals 302 and 303 denote a first cartridge shutter and a second cartridge shutter for opening and closing an opening 301C provided in the cartridge case 301, and numeral 304 denotes a rotor for moving the first cartridge shutter 302 and the second cartridge shutter 303. A spindle 301A provided on an inner surface of the cartridge case 301 mates with a first cam groove 302B provided in the first cartridge shutter 302, and a spindle 301B provided on the inner surface of the cartridge case 301 mates with a second cam groove 303B provided in the second cartridge shutter 303. A spindle 304A provided in the rotor 304 is fitted in a second hole 303A provided in the second cartridge shutter 303, and a spindle 304B provided in the rotor 304 is fitted in a first hole 302A provided in the first cartridge shutter 302. Numerals 304C, 304D and 304E respectively denote a first notch, a shutter gear and a second notch that are provided in this order on an outer periphery of the rotor 304.

Although not shown in FIG. 29, a cartridge case further is provided over the first disk 1A, and this cartridge case and the cartridge case 301 constitute an outer case of the second disk cartridge 300.

In FIG. 28, an arrow 151 indicates a direction in which the second disk cartridge 300 mounted on the media tray 19 is inserted into the first tray guide 20. The arrow 151 coincides with the arrow 106, which is the direction in which the media tray 19 moves with respect to the first tray guide 20 in FIG. 1.

A right inner wall lateral surface of the first tray guide 20 parallel with the direction indicated by the arrow 151 is provided with an opening and closing member 310 having a first projection 310A, an opening and closing rack 310B and a second projection 310C in this order. When the second disk cartridge 300 moves in the direction indicated by the arrow 151, the first projection 310A first mates with the first notch 304C, the opening and closing rack 310B then engages with the shutter gear 304D, and finally, the second projection 310C mates with the notch 304E, whereby the rotor 304 rotates in a direction indicated by an arrow 152. The rotation of the rotor 304 causes the first cartridge shutter 302 to rotate in a direction indicated by an arrow 153 while maintaining the mating between the spindle 301A and the first cam groove 302B and the fitting between the spindle 304B and the first hole 302A, and the second cartridge shutter 303 to rotate in a direction indicated by an arrow 154 while maintaining the mating between the spindle 301B and the second cam groove 303B and the fitting between the spindle 304A and the second hole 303A. The distance between the first cartridge shutter 302 and the second cartridge shutter 303 increases as they rotate. When the second disk cartridge 300 is inserted completely into the first tray guide 20, the position of the opening 301C provided in the cartridge case 301, that of the gap between the first cartridge shutter 302 and the second cartridge shutter 303 and that of the opening 304F provided in the rotor 304 match, so that the surface of the first disk 1A is exposed therethrough.

When the second disk cartridge 300 mounted on the media tray 19 moves in a direction opposite to the arrow 151 with respect to the first tray guide 20, the above-described operation is carried out reversely, so that the surface of the first disk 1A is hidden.

The opening and closing member 310 for opening and closing the opening 301C of the second disk cartridge 300 is provided in an inner lateral surface of the first tray guide 20 on the side of the arrow 107 in FIG. 1. When the first tray guide 20 moves in the direction indicated by the arrow 108, the opening and closing member 310 also moves as one piece with the first tray guide 20.

By providing the first tray guide 20 with the opening and closing member 310, the dimension of the first tray guide 20 on the side provided with the opening and closing member 310 increases along the Y-axis direction. In the present embodiment in which the first tray position is located on the side of the arrow 107 with respect to the second tray position as shown in FIG. 1, it is preferable that the opening and closing member 310 is provided on the lateral surface of the first tray guide 20 on the side of the arrow 107. Accordingly, even when providing the opening and closing member 310 causes an outer wall surface of the first tray guide 20 on the side of the arrow 107 to protrude in the direction indicated by the arrow 107, it is not necessary to increase the dimension between the first tray position and the second tray position, making it possible to prevent an increase in a moving amount of the first tray guide 20 between these positions.

Although the present embodiment illustrates a member having a simple shape consisting of one component as an example of the opening and closing member 310 for simplifying the description, a more complicated structure also may be provided for achieving a more reliable operation.

Also, in the disk apparatus of the present invention, the first conveying and driving motor 27, the second conveying and driving motor 22 and the lifting and lowering motor 10 are used as motors, the first conveying and driving motor pulley 28, the second conveying and driving motor pulley 23 and the lifting and lowering motor pulley 11 are used as motor pulleys, and the first conveying large pulley 30 and the second conveying large pulley 25 further are used as large pulleys. However, since they have similar specifications, the commonality of specifications can be achieved so as to reduce the kinds of components and conduct streamlining depending on a torque or a speed to be applied.

The invention may be embodied in other specific forms without departing from the spirit or essential characteristics thereof. The embodiments disclosed in this application are to be considered in all respects as illustrative and not restrictive, the scope of the invention being indicated by the appended claims rather than by the foregoing description, all changes that come within the meaning and range of equivalency of the claims are intended to be embraced therein.

### Industrial Applicability

Although the disk apparatus of the present invention is applicable to any fields without any particular limitation, it can be utilized as, for example, an apparatus for recording and/or reproducing data, more specifically, an apparatus for recording and/or reproducing visual or audio contents, a storage for a personal computer or the like.

## Claims

1. A disk apparatus comprising:
a first disk rotating mechanism for rotating a first disk mounted thereon, with data being recordable on and/or reproducible from the first disk using a first light beam;
a first optical head for emitting the first light beam and performing recording and/or reproducing with respect to the first disk;
a first optical head moving mechanism for moving the first optical head substantially in a radial direction of the first disk;
a second disk rotating mechanism for rotating a second disk mounted thereon, with data being recordable on and/or reproducible from the second disk using a second light beam;
a second optical head for emitting the second light beam and performing recording and/or reproducing with respect to the second disk;
a second optical head moving mechanism for moving the second optical head substantially in a radial direction of the second disk;
a transfer base on which the first disk rotating mechanism, the first optical head, the first optical head moving mechanism, the second disk rotating mechanism, the second optical head and the second optical head moving mechanism are mounted;
a media tray conveyed to a first tray position for performing recording and/or reproducing with respect to the first disk, a second tray position for performing recording and/or reproducing with respect to the second disk and a third tray position for mounting and removing the first disk and the second disk;
a first tray guide for guiding the media tray in a first direction that is parallel with a surface of the first disk and a surface of the second disk and substantially is orthogonal to a straight line connecting a center of rotation of the first disk rotating mechanism and a center of rotation of the second disk rotating mechanism;
a second tray guide for guiding the media tray in a second direction that is parallel with the surface of the first disk and the surface of the second disk and parallel with the straight line connecting the center of rotation of the first disk rotating mechanism and the center of rotation of the second disk rotating mechanism;
a first tray driving mechanism for moving the media tray in the first direction; and
a second tray driving mechanism for moving the media tray in the second direction;
wherein the first optical head and the second optical head are disposed on the same side with respect to a plane including a surface of a disk mounted on the media tray.

2. The disk apparatus according to claim 1, wherein the first tray position, the second tray position and the third tray position are in substantially the same plane.

3. The disk apparatus according to claim 1, wherein the second tray driving mechanism comprises at least one component capable of receiving a driving force from an external driving source.

4. The disk apparatus according to claim 1, wherein the transfer base is displaced toward and away from the disk mounted on the media tray.

5. The disk apparatus according to claim 1, wherein the transfer base is divided into a first transfer base on which the first disk rotating mechanism, the first optical head and the first optical head moving mechanism are mounted and a second transfer base on which the second disk rotating mechanism, the second optical head and the second optical head moving mechanism are mounted.

6. The disk apparatus according to claim 5, wherein the first transfer base and the second transfer base independently are displaced toward and away from the disk mounted on the disk tray.

7. The disk apparatus according to claim 6, further comprising a first lifting and lowering plate having a cam groove and moving in a direction substantially parallel with the second direction, and a second lifting and lowering plate having a cam groove and moving in the direction substantially parallel with the second direction,
wherein the first lifting and lowering plate and the second lifting and lowering plate respectively move in the direction substantially parallel with the second direction, thereby causing the respective cam grooves to displace the first transfer base and the second transfer base toward and away from the disk mounted on the disk tray.

8. The disk apparatus according to claim 7, further comprising
a first lifting and lowering rack and a second lifting and lowering rack that are provided respectively in the first lifting and lowering plate and the second lifting and lowering plate and have a pitch line in the direction substantially parallel with the second direction, and
a lifting and lowering gear that engages with the first lifting and lowering rack and the second lifting and lowering rack and moves the first lifting and lowering plate and the second lifting and lowering plate in the direction substantially parallel with the second direction.

9. The disk apparatus according to claim 8, wherein the first lifting and lowering rack is an intermittent rack having a first unmating region that does not engage with the lifting and lowering gear, and
the second lifting and lowering rack is an intermittent rack having a second unmating region that does not engage with the lifting and lowering gear.

10. The disk apparatus according to claim 9, further comprising an engagement switching mechanism that is driven by the movement of the first lifting and lowering plate so as to control the engagement between the second lifting and lowering rack and the lifting and lowering gear and driven by the movement of the second lifting and lowering plate so as to control the engagement between the first lifting and lowering rack and the lifting and lowering gear.

11. The disk apparatus according to claim 8, wherein the pitch line of the first lifting and lowering rack and that of the second lifting and lowering rack face each other with the lifting and lowering gear interposed therebetween.

12. The disk apparatus according to claim 10, wherein the first lifting and lowering plate comprises a substantially L-shaped first switching cam groove formed of a first straight portion that is substantially parallel with the second direction and a first orthogonal portion that is connected at right angles with the first straight portion,
the second lifting and lowering plate comprises a substantially L-shaped second switching cam groove formed of a second straight portion that is substantially parallel with the second direction and a second orthogonal portion that is connected at right angles with the second straight portion,
the engagement switching mechanism comprises a switching lever including a first pin that mates with the first switching cam groove and a second pin that mates with the second switching cam groove, and
the switching lever is rotatable around an axis that is equidistant from the first pin and the second pin.

13. The disk apparatus according to claim 12, wherein the second pin mates with the second straight portion only when the first pin mates with the first orthogonal portion, and
the first pin mates with the first straight portion only when the second pin mates with the second orthogonal portion.

14. The disk apparatus according to claim 12, wherein the lifting and lowering gear engages with the first lifting and lowering rack only when the first pin mates with the first straight portion, and
the lifting and lowering gear engages with the second lifting and lowering rack only when the second pin mates with the second straight portion.

15. The disk apparatus according to claim 7, further comprising
a first lifting and lowering rack and a second lifting and lowering rack that are provided respectively in the first lifting and lowering plate and the second lifting and lowering plate and have a pitch line in the direction substantially parallel with the second direction,
a first lifting and lowering gear that engages with the first lifting and lowering rack and moves the first lifting and lowering plate in the direction substantially parallel with the second direction, and
a second lifting and lowering gear that engages with the second lifting and lowering rack and moves the second lifting and lowering plate in the direction substantially parallel with the second direction.

16. The disk apparatus according to claim 1, wherein the second tray driving mechanism comprises
a driving source, and
a gear train for transmitting a driving force obtained by the driving source.

17. The disk apparatus according to claim 1, wherein the second tray driving mechanism comprises
a gear for transmitting a driving force,
a conveying rack that engages with the gear and moves in a direction parallel with the second direction,
a conveying rack pin provided in the conveying rack,
a conveying and driving lever that is held rotatably, and
a conveying cam groove that mates with the conveying rack pin and is provided in the conveying and driving lever along a radial direction with respect to an axis of rotation of the conveying and driving lever, and
the conveying rack is moved to rotate the conveying and driving lever, causing the first tray guide that mates directly or indirectly with a part of the conveying and driving lever to be driven along the second direction.

18. The disk apparatus according to claim 17, wherein the conveying cam groove has a substantially "Y" shape bifurcating on a side away from the axis of rotation.

19. The disk apparatus according to claim 1, wherein at least one of the first disk and the second disk is contained in a case-like disk cartridge.

20. The disk apparatus according to claim 19, wherein the disk cartridge has an opening for exposing the contained disk and a first cartridge shutter and a second cartridge shutter for opening and closing the opening, and
the first cartridge shutter and the second cartridge shutter respectively rotate so as to change a distance therebetween, thereby opening and closing the opening.

21. The disk apparatus according to claim 20, wherein an operation of opening and closing the opening by the first cartridge shutter and the second cartridge shutter is carried out together with moving the media tray along the first direction.

22. The disk apparatus according to claim 20, wherein a surface of the first tray guide substantially parallel with the first direction is provided with an opening and closing member for opening and closing the opening.

23. The disk apparatus according to claim 22, wherein a side of the first tray position with respect to the second tray position is the same as a side of the opening and closing member with respect to a direction that passes through a center of the disk contained in the disk cartridge and is parallel with the first direction.

24. The disk apparatus according to claim 1, further comprising a movable side positioning portion provided in the first tray guide and a fixed side positioning portion whose position relative to the second tray guide is constant,
wherein when the first tray guide is moved along the second direction, the movable side positioning portion contacts the fixed side positioning portion at a terminal end of a moving direction, thus positioning the first tray guide in the second direction.

25. The disk apparatus according to claim 1, further comprising a fixed side positioning portion whose position relative to the second tray guide is constant,
wherein when the media tray on which a disk cartridge containing the first disk or the second disk is mounted is moved along the second direction, the disk cartridge contacts the fixed side positioning portion at a terminal end of a moving direction, thus positioning the disk cartridge in the second direction.

26. The disk apparatus according to claim 1, wherein the first tray guide is provided with a common clamper unit that allows the first disk to be held firmly on the first disk rotating mechanism and allows the second disk to be held firmly on the second disk rotating mechanism.

27. The disk apparatus according to claim 1, wherein a mounting surface of the first disk in the first disk rotating mechanism and a mounting surface of the second disk in the second disk rotating mechanism have substantially the same height.

28. The disk apparatus according to claim 1, wherein a terminal position to which the media tray moves from the third tray position along the first direction is the first tray position.

29. The disk apparatus according to claim 1, wherein a distance between the center of rotation of the first disk rotating mechanism and the center of rotation of the second disk rotating mechanism is 0.9 to 1.1 times a dimension obtained by adding a radius of the first disk and a radius of the second disk.

30. The disk apparatus according to claim 1, further comprising a mechanical base on which the media tray, the first tray guide, the second tray guide, the first tray driving mechanism and the second tray driving mechanism are mounted,
wherein the transfer base is attached to the mechanical base via a damper for absorbing a vibration.

31. The disk apparatus according to claim 5, further comprising a mechanical base on which the media tray, the first tray guide, the second tray guide, the first tray driving mechanism and the second tray driving mechanism are mounted,
wherein the first transfer base and the second transfer base respectively are attached to the mechanical base via a first damper and a second damper for absorbing a vibration that have different vibration characteristics.

32. The disk apparatus according to claim 1, further comprising a mechanical base on which the media tray, the first tray guide, the second tray guide, the first tray driving mechanism and the second tray driving mechanism are mounted,
wherein the mechanical base is held by a chassis of the disk apparatus via a mechanical base damper for absorbing a vibration.

33. The disk apparatus according to claim 19, wherein the disk cartridge is provided with at least one hole,
the transfer base is provided with a positioning pin that is fitted in the hole provided in the disk cartridge, and
the fitting between the hole and the positioning pin allows the disk cartridge to be positioned with respect to the first disk rotating mechanism or the second disk rotating mechanism.

34. The disk apparatus according to claim 33, wherein a basal portion of the positioning pin is provided with a seating that contacts a surface of the disk cartridge.

35. The disk apparatus according to claim 34, wherein a positioning pin hole through which the seating is passed is formed on a surface of the media tray on which the disk cartridge is mounted.

36. The disk apparatus according to claim 35, wherein the seating is passed through the positioning pin hole when the first disk or the second disk is mounted on the first disk rotating mechanism or the second disk rotating mechanism.

37. The disk apparatus according to claim 35, wherein a clearance of 0.2 to 1.5 mm is provided between an inner peripheral surface of the positioning pin hole and an outer periphery of the seating.
